# EUROPEAN PATENT SPECIFICATION

(11) **EP 2 854 049 B1**
(45) Date of publication and mention of the grant of the patent: **31.05.2023**
(21) Application number: 14746533.0
(22) Date of filing: 27.01.2014
(51) Int. Cl.: G06F 3/0482, G06F 16/16, G06F 9/445

(54) **METHOD FOR MANAGING AND DISPLAYING FOLDERS BASED ON ANDROID SYSTEM AND MOBILE TERMINAL THEREOF**
VERFAHREN ZUR VERWALTUNG UND ANZEIGE VON ORDNERN AUF BASIS EINES ANDROID-SYSTEMS UND MOBILES ENDGERÄT DAFÜR
PROCÉDÉ PERMETTANT DE GÉRER ET D'AFFICHER DES DOSSIERS SUR LA BASE D'UN SYSTÈME ANDROID, ET TERMINAL MOBILE ASSOCIÉ

(30) Priority: 31.01.2013 CN 201310038616
(43) Date of publication of application: 01.04.2015
(73) Proprietor: Huawei Device Co., Ltd., Dongguan, Guangdong 523808 (CN)
(72) Inventor: SUN, Yuanlei, Shenzhen Guangdong 518129 (CN)
(74) Representative: Körber, Martin Hans
(86) International application number: PCT/CN2014/071538
(87) International publication number: WO 2014/117707

(56) References cited:
- CN-A- 102 479 307
- CN-A- 103 106 266
- US-A- 5 832 505
- US-A1- 2007 261 048
- Sameed Khan: "How To Prevent A Directory From Being Scanned By Android Gallery", , 19 April 2011 (2011-04-19), XP055210166, Retrieved from the Internet: URL:http://www.addictivetips.com/mobile/ho w-to-prevent-a-directory-from-being-scanne d-by-android-gallery/ [retrieved on 2015-08-28]
- WONG, S. ET AL.: 'Introduction of bear.nomedia management tools' 27 June 2012, XP055180335 Retrieved from the Internet: <URL:http://www.studiokuma.com/home.php?pag e.sknc/index>>

## Description

### TECHNICAL FIELD

The present application relates to the field of folder processing technologies, and in particular, to an Android system-based folder management method, and additionally to a mobile terminal using the folder management method.

### BACKGROUND

In the prior art, a mobile terminal, such as a mobile phone or a palmtop computer, is rather troublesome in operation due to lack of auxiliary tools such as a mouse and a keyboard of a personal computer. Particularly, when it is required to manage an attribute of a folder, the mobile terminal is unlike the personal computer in which settings "display" and "hidden" may be directly clicked on.

Specifically, on a common mobile terminal, if an album folder needs to be hidden, a file similar to a blacklist needs to be established in advance in an internal or external memory of the mobile terminal, and then a feature (such as a name, an album path and a derivative thereof) of the album that needs to be hidden is added to the file; when a gallery interface is opened, a main thread of the gallery interface finds the album in advance, and performs searching in the file according to the feature of the album, and if the feature of the album is found, the album is hidden when the gallery interface is drawn. However, once the feature of the album is changed (for example, the name is changed or the storage path is changed), the main thread of the gallery interface cannot find the feature of the album in the file, and cannot hide the album when the gallery interface is drawn; therefore, when a user opens the gallery interface, some private albums can easily be viewed by others, which causes unnecessary troubles. Especially, on an Android system-based mobile terminal, a large number of network albums and private albums are displayed on a gallery interface promiscuously, which easily causes unnecessary troubles for the user.

In addition, for some mobile terminals, when an album folder needs to be hidden, a manner of setting a ".nomedia" file in the album is further used: When a gallery interface is opened, the gallery acquires information about the album folder by using an internal or external memory; however, due to existence of the ".nomedia" file, the internal or external memory hides, from the gallery, existence of the album folder in which the ".nomedia" file is placed. In other words, this manner causes that a main thread of the gallery interface cannot read and record any related information (such as picture and video information) of the album, and the main thread of the gallery interface cannot determine whether the album exists (that is, the album is omitted and skipped directly); as a result, the hidden album cannot be quickly displayed again when required to be displayed subsequently, thereby causing unnecessary troubles for a user.

Sameed Khan: "How To Prevent A Directory From Being Scanned By Android Gallery", 19 April 2011 (20110419), , Retrieved from the Internet: URL: http://www.addictivetips.com/mobile/how-to-prevent-a-directory-from-being-scanned-by-android-gallery/, (20150828), describes methods to hide directories. The first method is creating a .nomedia file. Using any file explorer/manager application (such as Astro File Manager or File Expert), navigate to the directory that someone want hidden and create an empty file titled. Just like the method above. The second method is adding A Dot Prefix, which is using any file explorer/manager application, locate the directory that you want hidden and add a "." before its name (".directoryname"). The third method is using Super Manager or .nomedia Manager, which can disable media scanning for multiple directories by selecting the check box in front of each and tapping the toggle media scanning option below.

Document US 2007/261048 A1 describes an organization of application state and configuration settings. The operating system manages software entities by creating a construct called a context that organizes and manages software-related state and configuration settings of applications. A context may comprise an installation service, a configuration service and an activation service. Contexts can be linked or arranged hierarchically to form parent-child relationships. Hierarchies may be used to affect accessibility of software items, to satisfy dependencies, to control the visibility/invisibility of software items, to provide access to configuration settings and to override software availability, dependencies and configuration settings. An override may be applied to set policy when more than one context has a configuration setting, dependency or access to a software entity.

Document US 5,832,505 A describes a computer system for managing and configuring application properties and enabling system administrator to override certain user-set or host properties. A method, apparatus, and computer program product for managing and configuring program properties of an application program by loading properties from several lists, applying a set of precedence rules to resolve conflicts among properties, and applying the properties to the application program. Properties are listed in a plurality of lists including a list of default property values, a list of host-specific property values, a list of user-specific property values, a list of application-specific property values, and final properties lists. Values in the final property lists override conflicting previously loaded property values. The default properties list is loaded, as is a host-specific properties list, but only values for the then-current host are loaded. The user-specific properties list is loaded. User-defined properties override conflicting default properties. The final system-wide properties list is loaded, its values override any conflicting user-selected property, and such final properties may not be over-ridden by any user-selected property. A final host-specific property list is loaded. Values in the final host-specific property list override any conflicting properties in the host-specific properties list, and a user may not override such final properties. Values are written into a merged property list which is applied to the application program. Users may be assigned to user groups. A set of property lists can be associated with each group so that consistent property values are applied to all users within a group. Property values can be defined for specific application programs by using a default system properties list for the application program, and an overriding system properties list for the application program.

### SUMMARY

In view of this, the present application provides an Android system-based folder management and a mobile terminal, so as to solve a technical problem, in the prior art, that it is difficult to hide a folder simply, quickly and effectively.

To solve the foregoing problem, a first aspect of the present application provides an Android system-based folder management method, where the folder management method includes: acquiring a selected instruction that is generated after a to-be-processed folder is selected from a folder displayed on a display interface; generating, according to the selected instruction, a display attribute file for hiding the to-be-processed folder; storing the display attribute file in the to-be-processed folder, so as to hide the to-be-processed folder, which stores the display attribute file, from the display interface and to retain reading and recording of the to-be-processed folder performed by a device or system using the folder management method; and when the to-be-processed folder is read and recorded, determining whether the to-be-processed folder stores a corresponding display attribute file, when it is determined that the to-be-processed folder stores the corresponding display attribute file, hiding the to-be-processed folder from a display interface, and retaining reading and recording of the to-be processed folder.

Further, the step of acquiring a selected instruction that is generated after a to-be-processed folder is selected from a folder displayed on a display interface specifically includes: acquiring a selected instruction that is generated after a to-be-processed album is selected from an album displayed on a gallery interface, where the album is used to store a picture, audio and/or a video; the step of generating, according to the selected instruction, a display attribute file for hiding the to-be-processed folder specifically includes: generating, according to the selected instruction, a display attribute file for hiding the to-be-processed album; and the step of storing the display attribute file in the to-be-processed folder specifically includes: storing the display attribute file in the to-be-processed album, so as to hide the to-be-processed album, which stores the display attribute file, from the gallery interface when the to-be-processed album is read and recorded and it is further determined that the to-be-processed album stores a corresponding display attribute file.

With reference to the first aspect, in a possible implementation manner, the step of storing the display attribute file in the to-be-processed folder specifically includes: after the display attribute file is generated, acquiring a storage path corresponding to the to-be-processed folder; forming a write path of the display attribute file according to the storage path, and naming the display attribute file according to a predetermined naming rule; and writing the display attribute file which has been named into the to-be-processed folder according to the write path.

With reference to the first aspect, in a possible implementation manner, the folder management method further includes: acquiring a selected instruction that is generated after a to-be-displayed album is selected from an album displayed on the gallery interface; searching for, based on a storage path of the to-be-displayed album and according to the selected instruction, a display attribute file for hiding the to-be-displayed album; and when the corresponding display attribute file is found by searching, deleting the corresponding display attribute file from the to-be-displayed album, so as to display, when the to-be-displayed album with the display attribute file deleted is read and recorded and it is further determined that the to-be-displayed album is displayed on the gallery interface, the to-be-displayed album with the display attribute file deleted, where the album displayed on the gallery interface include an album configured with no display attribute file in a corresponding storage path, and an album configured with a display attribute file in a corresponding storage path but displayed because "display all albums" set by a user is acquired.

To solve the foregoing problem, a second aspect of the present application provides an Android system-based mobile terminal, and the mobile terminal includes a folder management apparatus and a folder display apparatus. The folder management apparatus includes an acquiring module, a file generating module, and a storage module. The folder display apparatus comprises an attribute determining module, a display processing module, and a display interface. The acquiring module is configured to acquire a selected instruction that is generated after a to-be-processed folder is selected from a folder displayed on the display interface; the file generating module is configured to generate, according to the selected instruction acquired by the acquiring module, a display attribute file for hiding the to-be-processed folder; the storage module is configured to store, in the to-be-processed folder, the display attribute file generated by the file generating module, so as to hide the to-be-processed folder, which stores the display attribute file, from the display interface and to retain reading and recording of the to-be-processed folder performed by a device or system using the folder management method. The attribute determining module is configured to determine whether the to-be-processed folder stores a corresponding display attribute file when the to-be-processed folder is read and recorded. When it is determined that the to-be-processed folder stores the corresponding display attribute file, the display processing module is configured to hide the to-be-processed folder from a display interface, and the folder display apparatus is configured to retain reading and recording of the to-be processed folder.

Further, the acquiring module is specifically configured to acquire a selected instruction that is generated after a to-be-processed album is selected from an album displayed on a gallery interface, where the gallery interface includes an Android native gallery interface, and the album is used to store a picture, audio and/or a video; the file generating module is specifically configured to generate, according to the selected instruction acquired by the acquiring module, a display attribute file for hiding the to-be-processed album; and the storage module is specifically configured to store, in the to-be-processed album, the display attribute file generated by the file generating module, so as to hide the to-be-processed album, which stores the display attribute file, from the display interface when the folder display apparatus reads and records the to-be-processed album and further determines that the to-be-processed album stores a corresponding display attribute file.

With reference to the second aspect, in a second possible implementation manner, the storage module specifically includes a path acquiring unit and a processing unit, where the path acquiring unit is configured to: after the file generating module generates the display attribute file, acquire a storage path corresponding to the to-be-processed folder; and the processing unit is configured to form a write path of the display attribute file according to the storage path acquired by the path acquiring unit, name the display attribute file according to a predetermined naming rule, and write the display attribute file which has been named into the to-be-processed folder according to the write path.

With reference to the first possible implementation manner of the second aspect, in a third possible implementation manner, the acquiring module is further specifically configured to acquire a selected instruction that is generated after a to-be-displayed album is selected from an album displayed on the gallery interface, and the folder management apparatus further includes a searching module and a deleting module, where the searching module is configured to search for, based on a storage path of the to-be-displayed album and according to the selected instruction acquired by the acquiring module, a display attribute file for hiding the to-be-displayed album; and the deleting module is configured to: when the searching module finds the corresponding display attribute file by searching, delete the corresponding display attribute file from the to-be-displayed album, so as to display, when the to-be-displayed album with the display attribute file deleted is read and recorded and it is further determined that the to-be-displayed album is displayed on the gallery interface, the to-be-displayed album with the display attribute file deleted, where the album displayed on the gallery interface include an album configured with no display attribute file in a corresponding storage path, and an album configured with a display attribute file in a corresponding storage path but displayed because "display all albums" set by a user is acquired.

Compared with the prior art, in the present application, a display attribute file used to indicate hiding of a corresponding to-be-processed folder is first stored in the to-be-processed folder, so that even if a feature (such as a storage path) of the to-be-processed folder is changed, determining can be still performed according to the display attribute file stored in the to-be-processed folder, so as to hide the to-be-processed folder that is preset to be hidden, which avoids unnecessary troubles and puzzles. Secondly, the display attribute file set in the present application merely indicates "hiding" of the corresponding to-be-processed folder, and a problem that the to-be-processed folder cannot be read and recorded due to being skipped and omitted is avoided; related information of the to-be-processed folder may be read and recorded in a manner in the prior art, and a hidden folder can be quickly displayed again according to the recorded related information when required to be displayed subsequently, thereby greatly facilitating use of a user, and improving user experience.

### BRIEF DESCRIPTION OF DRAWINGS

To describe the technical solutions in the embodiments of the present invention more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic flowchart of an implementation manner of a folder management method in the present application;
FIG. 2 is a schematic flowchart of a specific implementation manner of the folder management method shown in FIG. 1;
FIG. 3 is a schematic flowchart of another specific implementation manner of the folder management method shown in FIG. 1;
FIG. 4 is a schematic flowchart of another implementation manner of a folder management method in the present application;
FIG. 5 is a schematic flowchart of a specific implementation manner of the folder management method shown in FIG. 4;
FIG. 6 is a block diagram of a module of an implementation manner of a mobile terminal in the present application;
FIG. 7 is a block diagram of a module of a specific implementation manner of a folder management apparatus of the mobile terminal shown in FIG. 6;
FIG. 8 is a block diagram of a module of another implementation manner of a mobile terminal in the present application;
FIG. 9 is a schematic flowchart of an implementation manner of a folder display method in the present application;
FIG. 10 is a schematic flowchart of a specific implementation manner of the folder display method shown in FIG. 9;
FIG. 11 is a schematic flowchart of another specific implementation manner of the folder display method shown in FIG. 9;
FIG. 12 is a schematic flowchart of still another specific implementation manner of the folder display method shown in FIG. 9;
FIG. 13 is a block diagram of a module of an implementation manner of a folder display apparatus of a mobile terminal in the present application;
FIG. 14 is a block diagram of a module of a specific implementation manner of the folder display apparatus of the mobile terminal shown in FIG. 13; and
FIG. 15 is a block diagram of a module of still another implementation manner of a mobile terminal in the present application.

### DESCRIPTION OF EMBODIMENTS

For the purpose of description rather than limitation, the following provides such specific details as a specific system structure, interface, and technology to understand the present application thoroughly. However, it is understandable by a person skilled in the art that the present application can also be implemented in other embodiments not providing such specific details. In other cases, details of a well-known apparatus, circuit and method are omitted to avoid hindering the description of the present application by unnecessary details.

The following provides description with reference to the accompanying drawings and specific implementation manners.

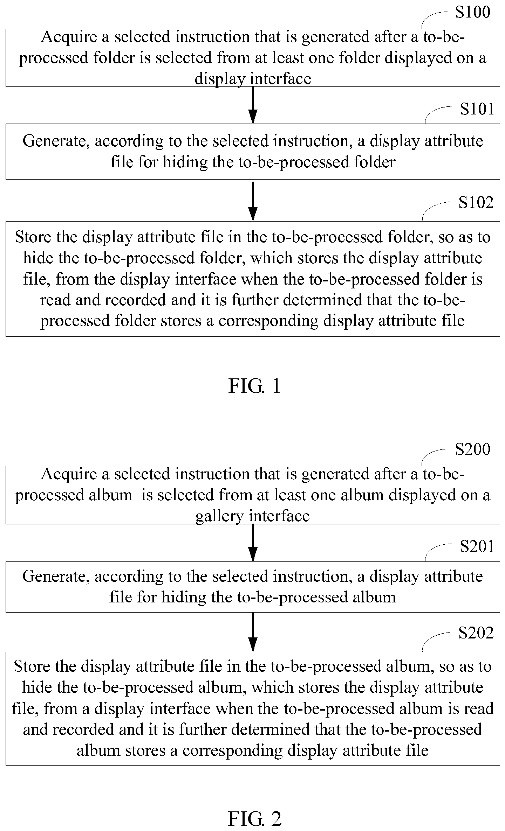

Implementation manner 1: Referring to FIG. 1, in this implementation manner, the folder management method is used in an Android system that is specifically applied to a terminal, such as a mobile phone, a tablet computer, or a palmtop computer. The folder management method of this implementation manner includes, but is not limited to, the following steps.

Step 100: Acquire a selected instruction that is generated after a to-be-processed folder is selected from a folder displayed on a display interface.

In step 100, a user selects, on a display interface in a manner of selecting by using a keyboard or selecting by touching, a folder that needs to be hidden, and when the user finishes selection, the selected instruction is generated automatically. It should be noted that, the folder may specifically be a generally defined folder, or may be a folder generated by specific software, such as an album or a system file, which is not limited in the scope understood by a person skilled in the art.

Step 101: Generate, according to the selected instruction, a display attribute file for hiding the to-be-processed folder.

In step 101, after the to-be-processed folder that the user intends to hide is acquired, the display attribute file may be generated according to an attribute feature, or the like of the to-be-processed folder, and the display attribute file may also be generated automatically according to a pre-definition of a system, which is not limited in this implementation manner.

Step 102: Store the display attribute file in the to-be-processed folder, so as to hide the to-be-processed folder, which stores the display attribute file, from the display interface when the to-be-processed folder is read and recorded and it is further determined that the to-be-processed folder stores a corresponding display attribute file.

In step 102, specific steps may include: after the display attribute file is generated, acquiring a storage path corresponding to the to-be-processed folder; and writing the display attribute file into the to-be-processed folder according to the storage path. In a process of performing the write action, a write path of the display attribute file may be formed according to the storage path, and the display attribute file is named according to a predetermined naming rule, so as to write the display attribute file which has been named into the to-be-processed folder according to the write path. In addition, a specific manner of naming a display attribute file may be naming distinctively in a manner of a feature, such as a prefix or postfix, for example, the display attribute file is named a ".hidden" file, so as to better distinguish the display attribute file from another folder; a size of the display attribute file may be 0 bytes, or a size of another byte, which is not limited herein. It can be easily seen that, in a manner of a prefix such as ".hidden", the display attribute file becomes a default "hidden" file, which can effectively prevent a user from performing a delete operation by mistake.

It should be particularly noted that, the display attribute file mentioned in the present application does not affect a regular process, i.e. reading and recording, of the to-be-processed folder performed by a device or system using the folder management method. In other words, when the device or system using the folder management method needs to display a folder, a process of subsequent actions, i.e. reading and recording of the to-be-processed folder for future use, is still retained, so as to effectively prevent the to-be-processed folder from being omitted and skipped by a hiding manner in the prior art, thereby reducing unnecessary troubles.

Compared with the prior art, in the present application, a display attribute file used to indicate hiding of a corresponding to-be-processed folder is first stored in the to-be-processed folder, so that even if a feature (such as a storage path) of the to-be-processed folder is changed, determining can be still performed according to the display attribute file stored in the to-be-processed folder, so as to hide the to-be-processed folder that is preset to be hidden, which avoids unnecessary troubles and puzzles. In addition, when the to-be-processed folder is copied and moved, the display attribute file is copied and moved along, thereby reducing troubles of repeated setting by the user; when the to-be-processed folder is deleted, the display attribute file is deleted along, thereby facilitating an operation of the user.

Secondly, the display attribute file set in the present application merely indicates "hiding" of the corresponding to-be-processed folder, and a problem that the to-be-processed folder cannot be read and recorded due to being skipped and omitted is avoided; related information of the to-be-processed folder may be read and recorded in a manner in the prior art, and a hidden folder can be quickly displayed again according to the recorded related information when required to be displayed subsequently, thereby greatly facilitating use of a user, and improving user experience.

Implementation manner 2: Referring to FIG. 2, in this implementation manner, the folder management method may be used in an Android system that is specifically applied to a terminal, such as a mobile phone, a tablet computer, or a palmtop computer. The folder management method of this implementation manner includes the following steps.

Step 200: Acquire a selected instruction that is generated after a to-be-processed album is selected from an album displayed on a gallery interface.

In step 200, specifically, in the folder management method of this implementation manner, a selected instruction that is generated after a to-be-processed album is selected from an album displayed on an Android-based native gallery interface may be acquired, and the album may be used to store a picture, audio and/or a video. It should be noted that, in a working process of the Android native gallery interface, when the gallery interface is opened, a main thread of the gallery interface finds the album in advance, and performs searching in a file according to a feature of the album, and if the feature of the album is found, the album is hidden when the gallery interface is drawn; otherwise, the album is displayed on the gallery interface. A certain defect exists in this working manner, that is, some private albums can be easily viewed by others, especially on the Android system-based gallery interface, a large number of network albums and private albums are displayed on the gallery interface promiscuously, which easily causes unnecessary troubles for a user. Therefore, the user may first select an album that needs to be hidden from the gallery interface by using a manner in step 200 in this implementation manner when convenient.

Step 201: Generate, according to the selected instruction, a display attribute file for hiding the to-be-processed album.

As described in step 200, after the user selects the to-be-processed album, in step 201, the display attribute file is generated automatically according to selection of the user. In this implementation manner, the display attribute file may be generated according to an attribute feature, or the like of the to-be-processed folder, or the display attribute file may be generated automatically according to a pre-definition of a system, which is not limited in this implementation manner.

Step 202: Store the display attribute file in the to-be-processed album, so as to hide the to-be-processed album, which stores the display attribute file, from a display interface when the to-be-processed album is read and recorded and it is further determined that the to-be-processed album stores a corresponding display attribute file.

In step 202, after the display attribute file is generated, a storage path corresponding to the to-be-processed album is acquired; then, the display attribute file is written into the to-be-processed album according to the storage path. In a process of performing the write action, a write path of the display attribute file may be formed according to the storage path, and the display attribute file is named according to a predetermined naming rule, so as to write the display attribute file which has been named into the to-be-processed album according to the write path. In addition, a specific manner of naming a display attribute file may be naming distinctively in a manner of a feature, such as a prefix or postfix, for example, the display attribute file is named a ".hidden" file, so as to better distinguish the display attribute file from another album; a size of the display attribute file may be 0 bytes, or a size of another byte, which is not limited herein. It can be easily seen that, in a manner of a prefix such as ".hidden", the display attribute file becomes a default "hidden" file, which can effectively prevent a user from performing a delete operation by mistake.

It should be noted that, the display attribute file in this implementation manner does not affect a regular process, i.e. reading and recording, of the to-be-processed album performed by a device or system using the folder management method. In other words, when the device or system using the folder management method needs to display an album, a process of subsequent actions, i.e. reading and recording of the to-be-processed album for future use, is still retained, so as to effectively prevent the to-be-processed album from being omitted and skipped by an album hiding method in the prior art, thereby reducing unnecessary troubles.

Compared with the prior art, in the present application, a display attribute file used to indicate hiding of a corresponding to-be-processed album is first stored in the to-be-processed album, so that even if a feature (such as a storage path) of the to-be-processed album is changed, determining can be still performed according to the display attribute file stored in the to-be-processed album, so as to hide the to-be-processed album that is preset to be hidden, which avoids unnecessary troubles and puzzles. In addition, when the to-be-processed album is copied and moved, the display attribute file is copied and moved along, thereby reducing troubles of repeated setting by the user; when the to-be-processed album is deleted, the display attribute file is deleted along, thereby facilitating an operation of the user.

Secondly, in order to avoid a defect, in the prior art, that an actually existing album cannot be read and recorded due to a file that is used, such as ".nomedia", the display attribute file set in the present application merely indicates "hiding" of the corresponding to-be-processed album, and a problem that the to-be-processed album cannot be read and recorded due to being skipped and omitted for being hidden is avoided, that is, related information of the to-be-processed album may be read and recorded in a manner in the prior art, and a hidden album can be quickly displayed again according to the recorded related information when required to be displayed subsequently, thereby greatly facilitating use of a user, and improving user experience.

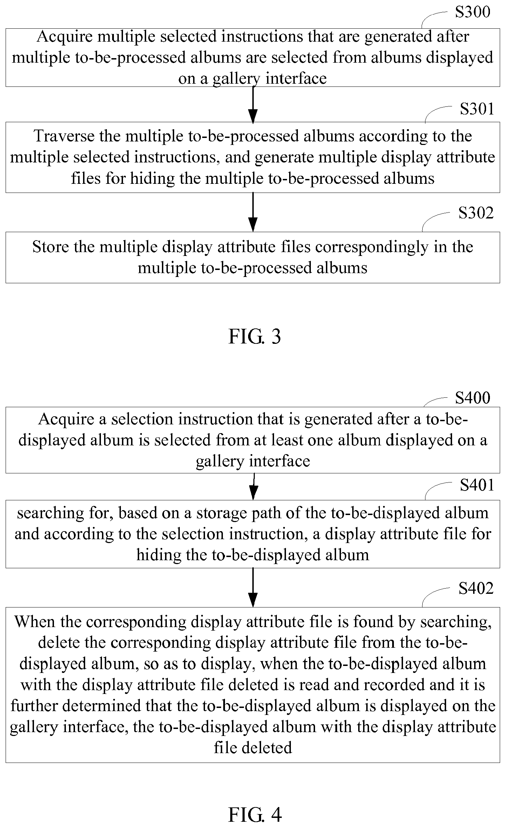

Implementation manner 3: Referring to FIG. 3, the folder management method may be used in a system such as an Android-based system, an Apple system, a Symbian system, or a Microsoft system, or may be specifically applied to a terminal, such as a mobile phone, a tablet computer, or a palmtop computer, which is not limited in this implementation manner. To implement unified optimization processing, save operation time of a user, and further improve user experience, the folder management method of this implementation manner includes, but is not limited to, the following steps.

Step 300: Acquire multiple selected instructions that are generated after multiple to-be-processed albums are selected from albums displayed on a gallery interface.

Different from the foregoing implementation manner, in this step 300, the user may select, according to an actual requirement, from the albums displayed on the gallery interface, multiple to-be-processed albums for processing simultaneously, and a specific operation and implementation process of step 300 is within a scope understood by a person skilled in the art, and is not described in detail.

Step 301: Traverse the multiple to-be-processed albums according to the multiple selected instructions, and generate multiple display attribute files for hiding the multiple to-be-processed albums.

After the user finishes selection performed on the albums displayed on the gallery interface and finishes confirming the selection by using a key or by touching, in step 301, the multiple to-be-processed albums are traversed according to the multiple selected instructions for subsequent unified processing. In a traversing manner, a process of repeatedly confirming one or more to-be-processed albums may be prevented effectively, and a problem of missing confirmation on one or more to-be-processed albums may also be prevented effectively. In this implementation manner, multiple to-be-processed albums are processed simultaneously and each to-be-processed album is merely confirmed once, thereby greatly facilitating use of a user and helping improve processing performance of the system. In addition, one display attribute file may be generated in advance, and then the generated display attribute file is written into each to-be-process album in a manner of copying and pasting one by one or the like, and a specific implementation process thereof is within a scope understood by a person skilled in the art, and is not limited.

Step 302: Store the multiple display attribute files correspondingly in the multiple to-be-processed albums.

As described in the foregoing, step 302 facilitates hiding of the to-be-processed albums according to the display attribute files when a main thread of the gallery interface subsequently reads and records the to-be-processed albums and determines that displaying is not performed on the gallery interface. In addition, after the display attribute files are generated, storage paths corresponding to the to-be-processed albums are acquired; then, the display attribute files are written into the to-be-processed albums according to the storage paths. In a process of performing the write action, write paths of the display attribute files may be formed according to the storage paths, and the display attribute files are named according to a predetermined naming rule, so as to write the display attribute files which have been named into the to-be-processed albums according to the write paths. In addition, a specific manner of naming a display attribute file may be naming distinctively in a manner of a feature, such as a prefix or postfix, for example, the display attribute file is named a ".hidden" file, so as to better distinguish the display attribute file from another album; a size of the display attribute file may be 0 bytes, 1 byte or the like, which is not limited herein.

The display attribute file in this implementation manner does not affect a regular process, i.e. reading and recording, of the to-be-processed album performed by a device or system using the folder management method. In other words, when the device or system using the folder management method needs to display an album, a process of subsequent actions, i.e. reading and recording of the to-be-processed album for future use, is still retained, so as to effectively prevent the to-be-processed album from being omitted and skipped, thereby reducing unnecessary troubles caused by that the to-be-processed album cannot be read.

Compared with the foregoing implementation manners, this implementation manner further implements unified optimization processing, saves operation time of the user, and further improves user experience, thereby being more practical.

Implementation manner 4: Referring to FIG. 4, in this implementation manner, the folder management method may be used in a system such as an Android-based system, an Apple system, a Symbian system, or a Microsoft system, or may be specifically applied to a terminal, such as a mobile phone, a tablet computer, or a palmtop computer, which is not limited in this implementation manner. The folder management method of this implementation manner includes, but is not limited to, the following steps.

Step 400: Acquire a selection instruction that is generated after a to-be-displayed album is selected from an album displayed on a gallery interface.

Corresponding to the foregoing one or more implementation manners, when a user needs to display an album (or another folder) on a display interface such as the gallery interface, a to-be-displayed album may be selected from a folder in a system, and in step 400, the to-be-displayed album may be selected when the gallery interface is displayed. It should be noted that, the album displayed on the gallery interface may specifically include an album configured with no display attribute file in a corresponding storage path, and an album configured with a display attribute file in a corresponding storage path but displayed because "display all albums" set by a user is acquired. The to-be-displayed album storing the display attribute file is displayed on a display interface such as a gallery in a predetermined manner, so that the to-be-displayed album is distinguished from a to-be-displayed album that is displayed on the display interface and does not store a corresponding display attribute file. In addition, a setting option "display all albums" is merely used to enable a person to understand the present application more easily. In a specific application, there may be options such as "display a hidden album (or file)", "cancel hiding", "display all", and "total gallery album", and when the user needs to display a hidden album, an operation may be performed by using one or more of the options, and a specific implementation process thereof is within a scope understood by a person skilled in the art, and is not limited.

Step 401: Searching for, based on a storage path of the to-be-displayed album and according to the selection instruction, a display attribute file for hiding the to-be-displayed album.

Compared with the prior art, in the present application, the display attribute file is stored in the storage path corresponding to the to-be-displayed album, that is, any album may store a separate display attribute file. In step 401, searching may be performed according to a feature such as a predetermined naming rule, for example, specifically searching for a file with a feature name such as ".hidden", or searching according to a size of the file, for example, searching for a file of 0 bytes or another file with a byte size consistent with that of a display attribute file, which is not limited herein.

Step 402: When the corresponding display attribute file is found by searching, delete the corresponding display attribute file from the to-be-displayed album, so as to display, when the to-be-displayed album with the display attribute file deleted is read and recorded and it is further determined that the to-be-displayed album is displayed on the gallery interface, the to-be-displayed album with the display attribute file deleted.

In step 402, after being found by searching, the display attribute file may be deleted completely to avoid generation of an unnecessary junk file; certainly, the display attribute file may also be pre-stored at a specific location, and when the user needs to hide an album the next time, the display attribute file stored at the specific location may be migrated to the album.

This implementation manner assists the foregoing one or more implementation manners, and implements a bidirectional setting process of displaying/hiding a folder such as an album. In a setting manner of the present application, the user does not need to log in to a location such as the system to perform separate setting; instead, after a to-be-displayed album is selected on a gallery interface, a display attribute file is deleted on a background, thereby greatly facilitating use of a user and improving user experience.

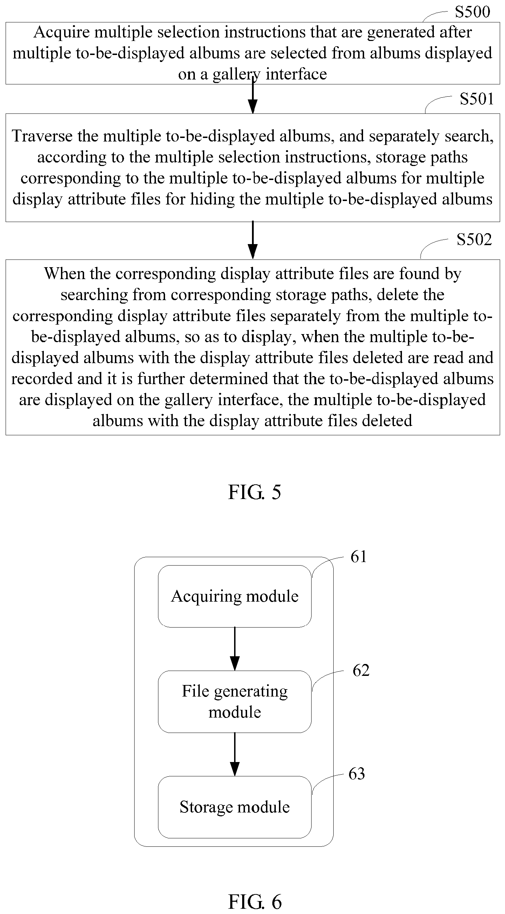

Implementation manner 5: Referring to FIG. 5, in this implementation manner, the folder management method may be used in a system such as an Android-based system, an Apple system, a Symbian system, or a Microsoft system, or may be specifically applied to a terminal, such as a mobile phone, a tablet computer, or a palmtop computer, which is not limited in this implementation manner. The folder management method of this implementation manner includes, but is not limited to, the following steps.

Step 500: Acquire multiple selection instructions that are generated after multiple to-be-displayed albums are selected from albums displayed on a gallery interface.

Different from the foregoing implementation manner, in this step 500, the user may select, according to an actual requirement, from the albums displayed on the gallery interface, multiple to-be-processed albums for processing simultaneously, and a specific operation and implementation process of step 500 is within a scope understood by a person skilled in the art, and is not described in detail.

Step 501: Traverse the multiple to-be-displayed albums, and separately search for, based on storage paths corresponding to the multiple to-be-displayed albums and according to the multiple selection instructions, multiple display attribute files for hiding the multiple to-be-displayed albums.

After the user finishes selection performed on the albums displayed on the gallery interface and finishes confirming the selection by using a key or by touching, in step 501, the multiple to-be-displayed albums are traversed according to the multiple selection instructions for subsequent unified processing. In a traversing manner, a process of repeatedly confirming one or more to-be-processed albums may be prevented effectively, and a problem of missing confirmation on one or more to-be-displayed albums may also be prevented effectively. In this implementation manner, multiple to-be-displayed albums are processed simultaneously and each to-be-displayed album is merely confirmed once, thereby greatly facilitating use of a user and helping improve processing performance of the system. Similarly, in step 501, searching may be performed according to a feature such as a predetermined naming rule, for example, specifically searching for a file with a feature name such as ".hidden", or searching according to a size of the file, for example, searching for a file of 0 bytes or another file with a byte size consistent with that of a display attribute file, which is not limited herein.

Step 502: When the corresponding display attribute files are found by searching from corresponding storage paths, delete the corresponding display attribute files separately from the multiple to-be-displayed albums, so as to display, when the multiple to-be-displayed albums with the display attribute files deleted are read and recorded and it is further determined that the to-be-displayed albums are displayed on the gallery interface, the multiple to-be-displayed albums with the display attribute files deleted.

In step 502, in this implementation manner, the display attribute files may be deleted completely to avoid generation of unnecessary junk files; certainly, the display attribute file may also be pre-stored at a specific location, and when the user needs to hide an album the next time, the display attribute file stored at the specific location may be migrated to the album.

Compared with the foregoing implementation manners, this implementation manner further implements unified optimization processing, saves operation time of the user, and further improves user experience, thereby being more practical.

Implementation manner 6: Referring to FIG. 6, a mobile terminal in this implementation manner may be a mobile phone, a tablet computer, a palmtop computer or the like based on an Android system. The mobile terminal in this implementation manner includes a folder management apparatus, where the folder management apparatus includes, but is not limited to: an acquiring module 61, a file generating module 62, and a storage module 63.

The acquiring module 61 is configured to acquire a selected instruction that is generated after a to-be-processed folder is selected from a folder displayed on a display interface. As described in the foregoing related implementation manners, the folder management apparatus in this implementation manner may be configured to process an album displayed on an Android native gallery interface of an Android system. Specifically, the acquiring module 61 is specifically configured to acquire a selected instruction that is generated after a to-be-processed album is selected from an album displayed on the gallery interface, and the album specifically may be used to store a picture, audio and/or a video.

The file generating module 62 is configured to generate, according to the selected instruction acquired by the acquiring module 61, a display attribute file for hiding the to-be-processed folder. Correspondingly, the folder management apparatus in this implementation manner may be configured to process the album displayed on the Android native gallery interface of the Android system, and the file generating module 62 is specifically configured to generate, according to the selected instruction acquired by the acquiring module 61, the display attribute file for hiding the to-be-processed album.

The storage module 63 is configured to store, in the to-be-processed folder, the display attribute file generated by the file generating module 62, so as to hide the to-be-processed folder, which stores the display attribute file, from the display interface when a folder display apparatus (not shown in the figure) of the mobile terminal reads and records the to-be-processed folder and further determines that the to-be-processed folder stores a corresponding display attribute file. Correspondingly, when the folder management apparatus in this implementation manner is configured to process the album displayed on the Android native gallery interface of the Android system, the storage module 63 is specifically configured to store, in the to-be-processed album, the display attribute file generated by the file generating module 62, so as to hide the to-be-processed album, which stores the display attribute file, from the display interface when the folder display apparatus of the mobile terminal reads and records the to-be-processed album and further determines that the to-be-processed album stores a corresponding display attribute file.

In a working process of the folder management apparatus of the mobile terminal in this implementation manner, after a user selects the to-be-processed album, the file generating module 62 generates the display attribute file automatically according to selection of the user. The file generating module 62 may generate the display attribute file according to an attribute feature, or the like of the to-be-processed folder, or may generate the display attribute file automatically according to a pre-definition of the system, which is not limited in this implementation manner.

After the display attribute file is generated, the storage module 63 acquires a storage path corresponding to the to-be-processed album; then, the storage module 63 writes the display attribute file into the to-be-processed album according to the storage path. In a process of performing the write action, a write path of the display attribute file may be formed according to the storage path, and the display attribute file is named according to a predetermined naming rule, so as to write the display attribute file which has been named into the to-be-processed album according to the write path. In addition, a specific manner of naming a display attribute file may be naming distinctively in a manner of a feature, such as a prefix or postfix, for example, the display attribute file is named a ".hidden" file, so as to better distinguish the display attribute file from another album; a size of the display attribute file may be 0 bytes or a size of another byte, which is not limited herein.

It should be noted that, the display attribute file in this implementation manner does not affect a regular process, i.e. reading and recording, of the to-be-processed album performed by a device or system using the folder management apparatus. In other words, when the device or system using the folder management apparatus needs to display an album, a process of subsequent actions, i.e. reading and recording of the to-be-processed album for future use, is still retained, so as to effectively prevent troubles caused by that the to-be-processed album cannot be read because it is omitted and skipped by an album hiding method in the prior art.

Compared with the prior art, in the present application, a display attribute file used to indicate hiding of a corresponding to-be-processed album is first stored in the to-be-processed album, so that even if a feature (such as a storage path) of the to-be-processed album is changed, determining can be still performed according to the display attribute file stored in the to-be-processed album, so as to hide the to-be-processed album that is preset to be hidden, which avoids unnecessary troubles and puzzles.

Secondly, in order to avoid a defect, in the prior art, that an actually existing album cannot be read and recorded due to a file that is used, such as ".nomedia", the display attribute file set in the present application merely indicates "hiding" of the corresponding to-be-processed album, and a problem that the to-be-processed album cannot be read and recorded due to being skipped and omitted for being hidden is avoided, that is, related information of the to-be-processed album may be read and recorded in a manner in the prior art, and a hidden album can be quickly displayed again according to the recorded related information when required to be displayed subsequently, thereby greatly facilitating use of a user, and improving user experience.

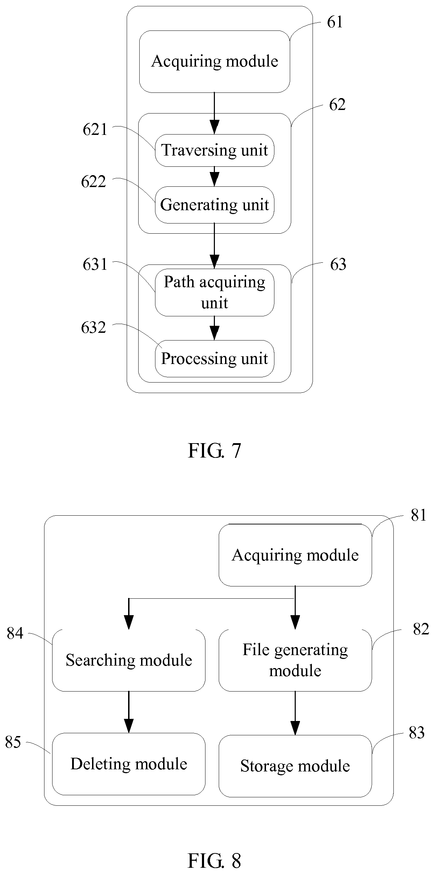

Implementation manner 7: Referring to FIG. 7, a system such as an Android system, an Apple system, a Symbian system, or a Microsoft system may be installed on a mobile terminal in this implementation manner, and the mobile terminal may specifically be a mobile phone, a tablet computer, a palmtop computer, or the like, which is not limited. The mobile terminal in this implementation manner includes a folder management apparatus, where the folder management apparatus includes, but is not limited to: an acquiring module 61, a file generating module 62, and a storage module 63.

Different from the foregoing implementation manner, the acquiring module 61 may specifically configured to acquire multiple selected instructions that are generated after multiple to-be-processed albums are selected from albums displayed on a gallery interface.

Correspondingly, the file generating module 62 may specifically include a traversing unit 621 and a generating unit 622. The traversing unit 621 may be configured to traverse the multiple to-be-processed albums according to the multiple selected instructions; and the generating unit 622 may be configured to: after the traversing unit 621 traverses the multiple to-be-processed albums, generate multiple display attribute files for hiding the multiple to-be-processed albums.

In this case, the storage module 63 may specifically configured to correspondingly store, in the multiple to-be-processed albums, the multiple display attribute files generated by the generating unit 622. The storage module 63 may specifically include a path acquiring unit 631 and a processing unit 632. The path acquiring unit 631 may be configured to: after the file generating module 62 generates the display attribute files, acquire storage paths corresponding to the to-be-processed albums and the processing unit 632 may be configured to form write paths of the display attribute files according to the storage paths acquired by the path acquiring unit 631, name the display attribute files according to a predetermined naming rule, and write the display attribute files which have been named into the to-be-processed folders according to the write paths. The processing unit 632 may specifically name the display attribute file a ".hidden" file, and a size of the display attribute file may be 0 bytes or a size of another byte, which is not limited herein.

In addition, for the folder management apparatus of the mobile terminal in this implementation manner, reference is made to related descriptions of the folder management method in the foregoing one or more implementation manners, which is within a scope that is easily understood by a person skilled in the art, and is not repeatedly described herein. Compared with the foregoing implementation manners, this implementation manner further implements unified optimization processing, saves operation time of the user, and further improves user experience, thereby being more practical.

Implementation manner 8: Referring to FIG. 8, a system such as an Android system, an Apple system, a Symbian system, or a Microsoft system may be installed on a mobile terminal in this implementation manner, and the mobile terminal may specifically be a terminal, such as a mobile phone, a tablet computer, or a palmtop computer, which is not limited. The mobile terminal in this implementation manner includes a folder management apparatus, where the folder management apparatus includes, but is not limited to: an acquiring module 81, a file generating module 82, a storage module 83, a searching module 84, and a deleting module 85.

Similar to the foregoing implementation manner: the acquiring module 81 is configured to acquire a selected instruction that is generated after a to-be-processed folder is selected from a folder displayed on a display interface; the file generating module 82 is configured to generate, according to the selected instruction acquired by the acquiring module 81, a display attribute file for hiding the to-be-processed folder; and the storage module 83 is configured to store, in the to-be-processed folder, the display attribute file generated by the file generating module 82, so as to hide the to-be-processed folder according to the display attribute file when a folder display apparatus (not shown in the figure) of the mobile terminal reads and records the to-be-processed folder and further determines that displaying is not performed on the display interface.

It should be noted that, the acquiring module 81 is specifically configured to acquire a selected instruction that is generated after a to-be-processed album is selected from an album displayed on the gallery interface, where the album is used to store a picture, audio and/or a video; the file generating module 82 is specifically configured to generate, according to the selected instruction acquired by the acquiring module 81, a display attribute file for hiding the to-be-processed album; and the storage module 83 is specifically configured to store, in the to-be-processed album, the display attribute file generated by the file generating module 82, so as to hide the to-be-processed album according to the display attribute file when the folder display apparatus reads and records the to-be-processed album and further determines that displaying is not performed on the gallery interface.

Different from the foregoing implementation manner, in this implementation manner, the searching module 84 is configured to search for, based on a storage path of the to-be-displayed album and according to the selected instruction acquired by the acquiring module 81, a display attribute file for hiding the to-be-displayed album.

The deleting module 85 is configured to: when the searching module 84 finds the corresponding display attribute file by searching, delete the corresponding display attribute file from the to-be-displayed album, so as to display, when the to-be-displayed album with the display attribute file deleted is read and recorded and it is further determined that the to-be-displayed album is displayed on the gallery interface, the to-be-displayed album with the display attribute file deleted.

When the user needs to perform unified processing on multiple to-be-displayed albums, the acquiring module 81 is specifically configured to acquire multiple selection instructions that are generated after multiple to-be-displayed albums are selected from albums displayed on the gallery interface. The searching module 84 is specifically configured to: after the acquiring module 81 acquires the multiple selection instructions, traverse the multiple to-be-displayed albums, and separately search for, based on storage paths corresponding to the multiple to-be-displayed albums and according to the multiple selection instructions, multiple display attribute files for hiding the multiple to-be-displayed albums. The deleting module 85 is specifically configured to: when the searching module 84 finds corresponding display attribute files from the corresponding storage paths by searching, delete the corresponding display attribute files separately from the multiple to-be-displayed albums, so as to display, when the multiple to-be-displayed albums with the display attribute files deleted are read and recorded and it is further determined that the to-be-displayed albums are displayed on the gallery interface, the multiple to-be-displayed albums with the display attribute files deleted. In addition, the albums displayed on the gallery interface include an album configured with no display attribute file in a corresponding storage path, and an album configured with a display attribute file in a corresponding storage path but displayed because "display all albums" set by a user is acquired.

In addition, for the folder management apparatus of the mobile terminal in this implementation manner, reference is made to related descriptions of the folder management method in the foregoing implementation manners, which is within a scope that is easily understood by a person skilled in the art, and is not repeatedly described herein.

This implementation manner assists the foregoing one or more implementation manners, and implements a bidirectional setting process of displaying/hiding a folder such as an album; in a setting manner of the present application, the user does not need to log in to a location such as the system to perform separate setting; instead, after a to-be-displayed album is selected on a gallery interface, a display attribute file is deleted on a background, thereby greatly facilitating use of a user and improving user experience.

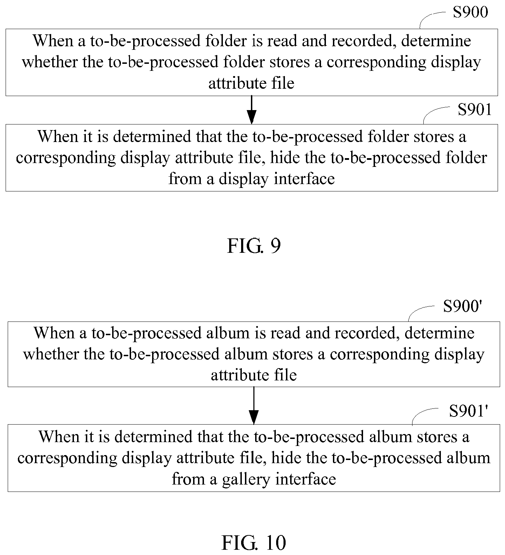

Implementation manner 9: Referring to FIG. 9, a folder display method in this implementation manner may be used in a system such as an Android-based system, an Apple system, a Symbian system, or a Microsoft system, or may be specifically applied to a terminal, such as a mobile phone, a tablet computer, or a palmtop computer, which is not limited. The folder display method in this implementation manner includes, but is not limited to, the following steps.

Step 900: When a to-be-processed folder is read and recorded, determine whether the to-be-processed folder stores a corresponding display attribute file.

In step 900, as described in the foregoing, the display attribute file may be generated by using the folder management method or the folder management apparatus in the foregoing one or more implementation manners, a storage path of the display attribute file corresponds to the to-be-processed folder, and the display attribute file is stored in the to-be-processed folder. In step 900, whether the to-be-processed folder stores a corresponding display attribute file may be determined according to a predetermined naming rule. For example, it is determined whether a file named ".hidden" or the like exists; or searching is performed according to a size of the file. Generally, a size of the display attribute file may be 0 bytes, and a conventional file needs to store a certain amount of data or the like, so that a size of the conventional file is basically not 0 bytes; certainly, the size of the display attribute file may also be set to a size of another byte, which is not limited herein. Further, it may be determined whether a hidden file exists in the to-be-processed folder and whether a name of the hidden file is the same as the predetermined naming rule (for example, ".hidden"), where the display attribute file is set in a hidden manner, which may effectively prevent a user from performing a delete operation by mistake.

Step 901: When it is determined that the to-be-processed folder stores a corresponding display attribute file, hide the to-be-processed folder from a display interface.

In step 901, this implementation manner may simply perform processing of "displaying" or "hiding" by using the display attribute file. In other implementation manners, parallel determining may be performed on another condition, for example, similar to a personal computer or the like, different rights are set for different users, so as to protect personal privacy of a user, and a specific implementation process thereof is within a scope understood by a person skilled in the art, which is not limited. In addition, as described in the foregoing, in step 901 in this implementation manner, when it is determined that a file, such as ".hidden", is set according to the predetermined naming rule or manner, it may be considered that the user needs to hide the to-be-processed folder, and then a "hiding" operation is performed.

In step 901, when it is determined that the to-be-processed folder does not store a corresponding display attribute file, the to-be-processed folder may be displayed on the display interface.

It should be noted that, the display attribute file mentioned in this implementation manner does not affect a regular process, i.e. reading and recording, of the to-be-processed folder performed by a device or system. In other words, when the device or system needs to display a folder, a process of subsequent actions, i.e. reading and recording of the to-be-processed folder for future use, is still retained, so as to effectively prevent troubles caused by that the to-be-processed folder cannot be read because it is omitted and skipped by a hiding method in the prior art. Moreover, in the present application, a display attribute file is stored in a to-be-processed folder so as to indicate a hiding manner; even if a feature (such as a storage path) of the to-be-processed folder is changed, determining can be still performed according to the display attribute file stored in the to-be-processed folder, so as to hide the to-be-processed folder that is preset to be hidden, which avoids unnecessary troubles and puzzles. In addition, when the to-be-processed folder is copied and moved, the display attribute file is copied and moved along, thereby reducing troubles of repeated setting by the user; when the to-be-processed folder is deleted, the display attribute file is deleted along, thereby facilitating an operation of the user.

In this implementation manner, it is determined whether a display attribute file exists in a to-be-processed folder, so as to decide whether to display the corresponding to-be-processed folder, which effectively protects personal privacy of a user. Moreover, in the folder display method in this implementation manner, an operation of reading and recording the hidden to-be-processed folder is retained, so as to facilitate an operation of the user when the corresponding to-be-processed folder needs to be displayed, thereby reducing unnecessary troubles.

Implementation manner 10: Referring to FIG. 10, a folder display method in this implementation manner may be used in a system such as an Android-based system, an Apple system, a Symbian system, or a Microsoft system, or may be specifically applied to a terminal, such as a mobile phone, a tablet computer, or a palmtop computer, which is not limited. The folder display method in this implementation manner includes, but is not limited to, the following steps.

Step 900': When a to-be-processed album is read and recorded, determine whether the to-be-processed album stores a corresponding display attribute file.

The folder display method in this implementation manner may be applied to an Android native gallery interface, for example, may work as a main thread of the gallery interface, and the to-be-processed album (or album) may be used to store a picture, audio and/or a video and the like, which is within a scope understood by a person skilled in the art, and is not limited. It should be noted that, in a working process of the Android native gallery interface in the prior art, generally, when the gallery interface is opened, a main thread of the gallery interface finds the album in advance, and then performs searching in a file according to a feature of the album; if the feature of the album is found, the album is hidden when the gallery interface is drawn; otherwise, the album is displayed on the gallery interface. A certain defect exists in this working manner, that is, some private albums can be easily viewed by others, especially on the Android system-based gallery interface, a large number of network albums and private albums are displayed on the gallery interface promiscuously, which easily causes unnecessary troubles for a user. In step 900' in this implementation manner, when the to-be-processed album is read and recorded, actions such as drawing and displaying the gallery interface are not performed at the first time, and it is further determined whether the corresponding display attribute file exists in the to-be-processed album. It can be easily seen that, compared with the prior art, operations in this step 900' are more intelligent and selectable.

In addition, a name, a byte size, and other manners of the display attribute file may be set in advance, the display attribute file merely needs to be stored in the to-be-processed album according to selection of the user, and specific content, such as the name and the size, of the display attribute file is limited in this implementation manner. Certainly, the display attribute file may also be set in the to-be-processed album in a naming manner (for example, ".hidden") in the foregoing one or more implementation manners and in a hidden manner, which is within a scope understood by a person skilled in the art, and is not limited.

Step 901': When it is determined that the to-be-processed album stores a corresponding display attribute file, hide the to-be-processed album from a gallery interface.

It should be pointed out that, compared with the prior art, in step 900', an action of reading and recording the hidden to-be-processed album is still executed, and when it is determined whether to perform displaying, selection processing is performed by using step 901'. In this manner, a processing process that the hidden to-be-processed album is omitted and skipped may be effectively prevented, thereby facilitating an operation of the user when the hidden to-be-processed album needs to be displayed subsequently.

In this implementation manner, a problem, in the prior art, that a folder such as an album cannot be intelligently hidden is effectively solved, and a problem, in the prior art, that after an album is hidden, the hidden album cannot be quickly displayed again can also be effectively avoided. In the present application, after a to-be-processed album is read and recorded, whether to perform a displaying operation is determined according to a preset display attribute file, thereby effectively protecting personal privacy of a user, and improving user experience.

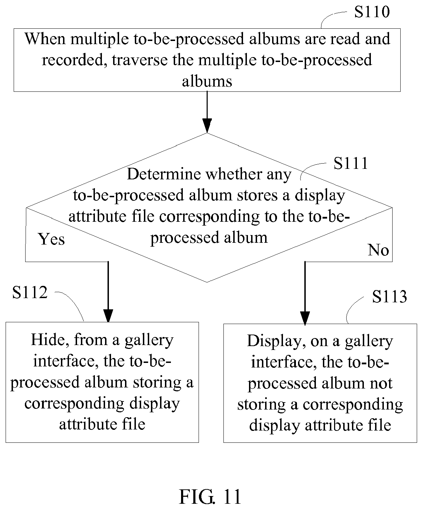

Implementation manner 11: Referring to FIG. 11, a folder display method in this implementation manner may be used in a system such as an Android-based system, an Apple system, a Symbian system, or a Microsoft system, or may be specifically applied to a terminal, such as a mobile phone, a tablet computer, or a palmtop computer, which is not limited. The folder display method in this implementation manner includes, but is not limited to, the following steps.

Step 110: When multiple to-be-processed albums are read and recorded, traverse the multiple to-be-processed albums.

In step 110, the multiple read and recorded to-be-processed albums may include an album configured with no display attribute file in a corresponding storage path and an album configured with a display attribute file in a corresponding storage path. For example, on an Android-based native gallery interface (or a gallery interface of another operating system), before the gallery interface is drawn and displayed, all to-be-processed albums need to be enumerated from a memory such as a media (a built-in storage device or an external storage device), and a traversing manner used in step 110 may effectively prevent a process of repeated determining on one or more to-be-processed albums, and may also effectively prevent a problem of missing confirmation on one or more to-be-processed albums. In this implementation manner, multiple to-be-processed albums are processed simultaneously and each to-be-processed album is merely confirmed once, thereby greatly facilitating use of a user and helping improve processing performance of the system.

Step 111: Determine whether any to-be-processed album stores a display attribute file corresponding to the to-be-processed album.

In step 111, for each traversed to-be-processed album, it is determined whether the album stores a corresponding display attribute file. In this implementation manner, when the to-be-processed album is read and recorded, actions such as drawing and displaying the gallery interface are not performed at the first time, and it is further determined whether the corresponding display attribute file exists in the to-be-processed album. A name, a byte size, and other manners of the display attribute file may be set in advance, the display attribute file merely needs to be stored in the to-be-processed album according to selection of the user, and specific content, such as the name and the size, of the display attribute file is limited in this implementation manner. Certainly, the display attribute file may also be set in the to-be-processed album in a naming manner (for example, ".hidden") in the foregoing one or more implementation manners and in a hidden manner, which is within a scope understood by a person skilled in the art, and is not limited. When it is determined in step 111 that the to-be-processed album stores a corresponding display attribute file, step 112 is performed, and when it is determined in step 111 that the to-be-processed album does not store a corresponding display attribute file, step 113 is performed.

Step 112: Hide, from a gallery interface, the to-be-processed album storing a corresponding display attribute file.

Step 113: Display, on a gallery interface, the to-be-processed album not storing a corresponding display attribute file.

In step 113, the to-be-processed album storing a corresponding display attribute file may be displayed on the gallery interface in a predetermined manner, so that the to-be-processed album is distinguished from the to-be-processed album (which, for a folder, is the to-be-processed folder) that is displayed on the gallery interface (which, for a folder, is the display interface) and does not store a corresponding display attribute file. Specifically, in the predetermined manner, a user may be reminded in a mark manner, and a difference of display brightness and luminance between the to-be-processed album storing a corresponding display attribute file and the to-be-processed album not storing a corresponding display attribute file may also be adjusted, as long as the user can conveniently and intuitively perform determining, which is within a scope understood by a person skilled in the art, and is not limited.

In this implementation manner, unified processing is performed on all read and recorded to-be-processed albums, so as to prevent a situation in the prior art that a to-be-processed album that is set to be hidden cannot be read and recorded, thereby facilitating a subsequent operation of the user. In the present application, an operation of hiding a to-be-processed album is performed by setting a display attribute file in the to-be-processed album, thereby greatly facilitating use of a user and improving user experience.

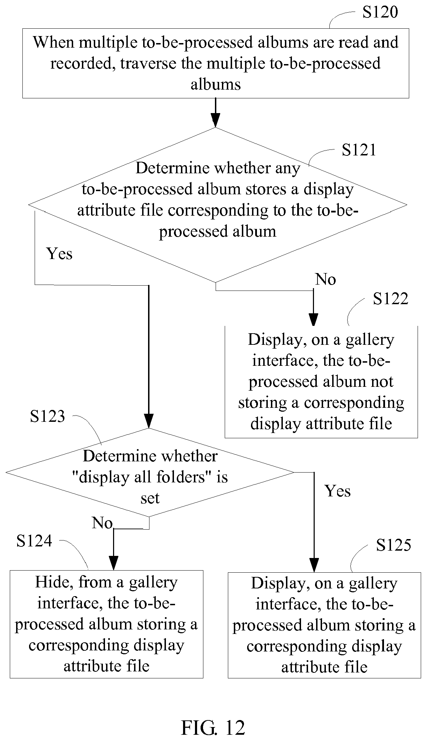

Implementation manner 12: Referring to FIG. 12, a folder display method in this implementation manner may be used in a system such as an Android-based system, an Apple system, a Symbian system, or a Microsoft system, or may be specifically applied to a terminal, such as a mobile phone, a tablet computer, or a palmtop computer, which is not limited. The folder display method in this implementation manner includes, but is not limited to, the following steps.

Step 120: When multiple to-be-processed albums are read and recorded, traverse the multiple to-be-processed albums.

In step 120, the multiple read and recorded to-be-processed albums include an album configured with no display attribute file in a corresponding storage path and an album configured with a display attribute file in a corresponding storage path. For example, on an Android-based native gallery interface (or a gallery interface of another operating system), before the gallery interface is drawn and displayed, all to-be-processed albums need to be enumerated from a memory such as a media (a built-in storage device or an external storage device), and a traversing manner used in step 120 may effectively prevent a process of repeated determining on one or more to-be-processed albums, and may also effectively prevent a problem of missing confirmation on one or more to-be-processed albums. In this implementation manner, multiple to-be-processed albums are processed simultaneously and each to-be-processed album is merely confirmed once, thereby greatly facilitating use of a user and helping improve processing performance of the system.

Step 121: Determine whether any to-be-processed album stores a display attribute file corresponding to the to-be-processed album.

In step 121, for each traversed to-be-processed album, it is determined whether the album stores a corresponding display attribute file. A name, a byte size, and other manners of the display attribute file may be set in advance, the display attribute file merely needs to be stored in the to-be-processed album according to selection of the user, and specific content, such as the name and the size, of the display attribute file is limited in this implementation manner. Certainly, the display attribute file may also be set in the to-be-processed album in a naming manner (for example, ".hidden") in the foregoing one or more implementation manners and in a hidden manner, which is within a scope understood by a person skilled in the art, and is not limited. When it is determined in step 121 that the to-be-processed album does not store a corresponding display attribute file, step 122 is performed, and when it is determined in step 121 that the to-be-processed album stores a corresponding display attribute file, step 123 is performed.

Step 122: Display, on a gallery interface, the to-be-processed album not storing a corresponding display attribute file.

Step 123: Determine whether "display all folders" is set. A setting option of "display all albums" in step 123 is merely used to enable a person to understand the present application more clearly. In a specific application, there may be options such as "display a hidden album (or file)", "cancel hiding", "display all", and "total gallery album", and when the user needs to display a hidden album, an operation may be performed by using one or more of the options, and a specific implementation process thereof is within a scope understood by a person skilled in the art, and is not limited. When it is determined in step 123 that the to-be-processed folder stores a corresponding display attribute file and "display all folders" is not set, step 124 is performed; and when it is determined that the to-be-processed folder stores a corresponding display attribute file but "display all folders" is set, step 125 is performed.

Step 124: Hide, from a gallery interface, the to-be-processed album storing a corresponding display attribute file.

Step 125: Display, on a gallery interface, the to-be-processed album storing a corresponding display attribute file.

It should be noted that, in step 125, the to-be-processed album storing a corresponding display attribute file may be displayed on the gallery interface in a predetermined manner, so that the to-be-processed album is distinguished from the to-be-processed album that is displayed on the gallery interface but does not store a display attribute file. Specifically, in the predetermined manner, a user may be reminded in a mark manner, and a difference of display brightness and luminance between the to-be-processed album storing a corresponding display attribute file and the to-be-processed album not storing a corresponding display attribute file may also be adjusted, as long as the user can conveniently and intuitively perform determining, which is within a scope understood by a person skilled in the art, and is not limited. As described in the foregoing, when the to-be-processed album storing a corresponding display attribute file is displayed on the gallery interface and displayed in a distinguished manner, if the user intends to set "display" for the to-be-processed album configured with a corresponding display attribute file, the folder management method or folder management apparatus mentioned in the foregoing one or more implementation manners may be used to delete the display attribute file in the to-be-processed album, so as to restore display.

It can be easily seen that the folder display method in this implementation manner may be combined with the folder management method or folder management apparatus in the foregoing implementation manners to implement a setting switching operation of "hiding" or "displaying" a folder such as an album, thereby greatly facilitating use of a user and improving user experience. Moreover, in this implementation manner, a setting or operation option of "display all folders" is used, which can facilitate simple implementation for the user that a hidden to-be-processed album is displayed when required, and can also effectively prevent the user from forgetting the hidden to-be-processed album.

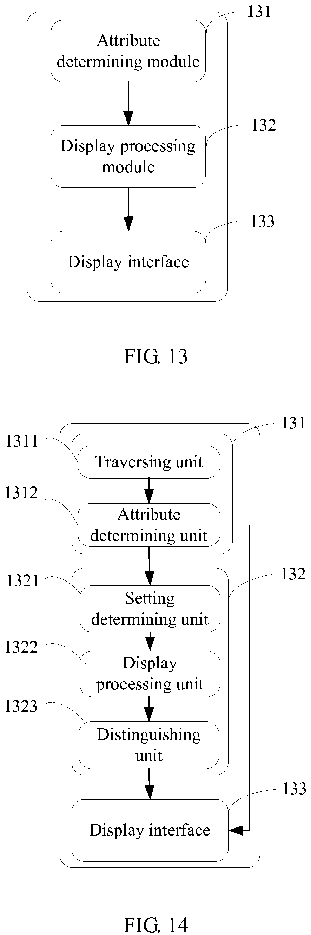

Implementation manner 13: Referring to FIG. 13, an Android system, an Apple system, a Symbian system, a Microsoft system, or the like may be installed and used on a mobile terminal in this implementation manner, and the mobile terminal may specifically be a mobile phone, a tablet computer, a palmtop computer, or the like, which is not limited. The mobile terminal in this implementation manner includes a folder display apparatus, where the folder display apparatus includes, but is not limited to, an attribute determining module 131, a display processing module 132, and a display interface 133.

The attribute determining module 131 is configured to: when a to-be-processed folder is read and recorded, determine whether the to-be-processed folder stores a corresponding display attribute file.

As described in the foregoing, the display attribute file may be generated by using the folder management method or the folder management apparatus in the foregoing one or more implementation manners, a storage path of the display attribute file corresponds to the to-be-processed folder, and the display attribute file is stored in the to-be-processed folder. The attribute determining module 131 may determine, according to a predetermined naming rule, whether the to-be-processed folder stores a corresponding display attribute file. For example, it is determined whether a file named ".hidden" or the like exists; or searching is performed according to a size of a file. Generally, a size of the display attribute file may be 0 bytes, and a conventional file needs to store a certain amount of data or other content, so that a size of the conventional file is basically not 0 bytes; certainly, the size of the display attribute file may also be set to a size of another byte, which is not limited herein. Further, the attribute determining module 131 may determine whether a hidden file exists in the to-be-processed folder and whether a name of the hidden file is the same as the predetermined naming rule (for example, ".hidden"), where the display attribute file is set in a hidden manner, which may effectively prevent a user from performing a delete operation by mistake.

The display processing module 132 is configured to: when the attribute determining module 131 determines that the to-be-processed folder stores a corresponding display attribute file, hide the to-be-processed folder from the display interface 133.

In this implementation manner, the display processing module 132 may simply perform processing of "displaying" or "hiding" by using the display attribute file, and in other implementation manners, the display processing module 132 may perform parallel determining on another condition, for example, similar to a personal computer or the like, different rights are set for different users, so as to protect personal privacy of a user, and a specific implementation process thereof is within a scope understood by a person skilled in the art, which is not limited. In addition, as described in the foregoing, when the display processing module 132 in this implementation manner determines that a file, such as ".hidden", is set according to the predetermined naming rule or manner, it may be considered that the user needs to hide the to-be-processed folder, and then a "hiding" operation is performed.

The display interface 133 may use a specific display manner, such as a gallery interface or a folder interface, which may specifically provide a man-machine operation interface for the user to perform an operation, which is within a scope understood by a person skilled in the art, and is not limited.

It should be noted that the display attribute file mentioned in this implementation manner does not affect a regular process, i.e. reading and recording, of the to-be-processed folder performed by the folder display apparatus of the mobile terminal. In other words, when the folder display apparatus needs to display a folder, a process of subsequent actions, i.e. reading and recording of the to-be-processed folder for future use, is still retained, so as to effectively prevent troubles caused by that the to-be-processed folder cannot be read because it is omitted and skipped by a hiding method in the prior art. Moreover, in the present application, a display attribute file is stored in a to-be-processed folder so as to indicate a hiding manner; even if a feature (such as a storage path) of the to-be-processed folder is changed, determining can be still performed according to the display attribute file stored in the to-be-processed folder, so as to hide the to-be-processed folder that is preset to be hidden, which avoids unnecessary troubles and puzzles. In addition, when the to-be-processed folder is copied and moved, the display attribute file is copied and moved along, thereby reducing troubles of repeated setting by the user; when the to-be-processed folder is deleted, the display attribute file is deleted along, thereby facilitating an operation of the user.

In addition, for a specific working process or principle of the mobile terminal and the folder display apparatus of the mobile terminal in this implementation manner, reference may be made to related descriptions in the foregoing implantation manners, which is within a scope that is easily understood by a person skilled in the art, and is not repeatedly described herein.

The mobile terminal in this implementation manner determines, by using the folder display apparatus, whether a display attribute file exists in a to-be-processed folder, and then decides whether to display the corresponding to-be-processed folder, thereby effectively protecting personal privacy of a user. Moreover, the folder display apparatus in this implementation manner retains an operation of reading and recording a hidden to-be-processed folder, so as to facilitate an operation of the user when the corresponding to-be-processed folder needs to be displayed, thereby reducing unnecessary troubles.

Implementation manner 14: Further referring to FIG. 14 in combination with FIG. 13, a system, such as an Android system, an Apple system, a Symbian system, a Microsoft system, may be installed and used on a mobile terminal in this implementation manner, and the mobile terminal may specifically be a terminal such as a mobile phone, a tablet computer, or a palmtop computer, which is not limited. It should be noted that, in this implementation manner, specific modules and units may perform a similar processing manner on a folder such as an album, and a description is not merely limited to a specific example of "album".

The mobile terminal in this implementation manner includes a folder display apparatus, where the folder display apparatus includes, but is not limited to, an attribute determining module 131, a display processing module 132, and a display interface 133.

Compared with the attribute determining module 131 in implementation manner 13, the attribute determining module 131 in this implementation manner is specifically configured to: when a to-be-processed album is read and recorded, determine whether the to-be-processed album stores a corresponding display attribute file.

The display processing module 132 is specifically configured to: when the attribute determining module 131 determines that the to-be-processed album stores a corresponding display attribute file, hide the to-be-processed album from the display interface 133 (which may specifically be an Android-based native gallery interface in this implementation manner), where the album may specifically be used to store a picture, audio and/or a video, and the like.

Further, the attribute determining module 131 may specifically include a traversing unit 1311 and an attribute determining unit 1312. The traversing unit 1311 is configured to: when multiple to-be-processed albums are read and recorded, traverse the multiple to-be-processed albums. The attribute determining unit 1312 is configured to: after the traversing unit 1311 traverses the multiple to-be-processed albums, determine whether any to-be-processed album stores a display attribute file corresponding to the to-be-processed album. The display processing module 132 is specifically configured to: when the attribute determining unit 1312 determines that the to-be-processed album stores a corresponding display attribute file, hide, from the gallery interface, the to-be-processed album storing the corresponding display attribute file, and when the attribute determining unit 1312 determines that the to-be-processed album does not store a corresponding display attribute file, display, on the gallery interface, the to-be-processed album not storing the corresponding display attribute file.

Correspondingly, the display processing module 132 may specifically include a setting determining unit 1321, a display processing unit 1322, and a distinguishing unit 1323.

The setting determining unit 1321 may be configured to: when the attribute determining module 131 determines that the to-be-processed album stores a corresponding display attribute file, further determine whether "display all folders" is set. It can be easily seen that, in this implementation manner, the setting determining unit 1321 determines a setting or operation option of "display all folders", which can facilitate simple implementation for the user that a hidden to-be-processed album is displayed when required, and can also effectively prevent the user from forgetting the hidden to-be-processed album.

The display processing unit 1322 may be configured to: when the attribute determining module 131 determines that the to-be-processed album stores a corresponding display attribute file and the setting determining unit 1321 determines that "display all folders" is not set, hide, from the display interface 133, the to-be-processed album storing the corresponding display attribute file; when the attribute determining module 131 determines that the to-be-processed album stores a corresponding display attribute file but the setting determining unit 1321 determines that "display all folders" is set, display, on the display interface 133, the to-be-processed album storing the corresponding display attribute file; and when the attribute determining module 131 determines that the to-be-processed album does not store a corresponding display attribute file, display, on the display interface 133, the to-be-processed album not storing the corresponding display attribute file.

The distinguishing unit 1323 may be configured to: when the attribute determining module 131 determines that the to-be-processed album stores a corresponding display attribute file but the setting determining unit 1321 determines that "display all folders" is set, display, on the display interface 133 in a predetermined manner, the to-be-processed album storing the corresponding display attribute file, so that the to-be-processed album is distinguished from the to-be-processed album that is displayed on the display interface 133 and does not store a corresponding display attribute file.

With reference to the foregoing one or more implementation manners, it can be easily seen that the display attribute file mentioned in this implementation manner does not affect a regular process, i.e. reading and recording, of the to-be-processed album performed by the folder display apparatus. In other words, when the folder display apparatus needs to display an album, a process of subsequent actions, i.e. reading and recording of the to-be-processed album for future use, is still retained, so as to effectively prevent troubles caused by that the to-be-processed album cannot be read because it is omitted and skipped by a hiding method in the prior art. Moreover, in the present application, a display attribute file is stored in a to-be-processed album, so as to indicate a hiding manner, so that even if a feature (such as a storage path) of the to-be-processed album is changed, determining can be still performed according to the display attribute file stored in the to-be-processed album, so as to hide the to-be-processed album that is preset to be hidden, which avoids unnecessary troubles and puzzles. In addition, when the to-be-processed album is copied and moved, the display attribute file is copied and moved along, thereby reducing troubles of repeated setting by the user; when the to-be-processed album is deleted, the display attribute file is deleted along, thereby facilitating an operation of the user.

The mobile terminal in this implementation manner determines, by using the folder display apparatus, whether a display attribute file exists in a to-be-processed album, and then decides whether to display the corresponding to-be-processed album, thereby effectively protecting personal privacy of a user. Moreover, the folder display apparatus in this implementation manner retains an operation of reading and recording a hidden to-be-processed album, so as to facilitate an operation of the user when the corresponding to-be-processed album needs to be displayed, thereby reducing unnecessary troubles. Moreover, in this implementation manner, the setting determining unit 1321 determines a setting or operation option of "display all folders", which further enriches use performance of the folder display apparatus, and does not require a complicated operation of restoring display in the prior art.

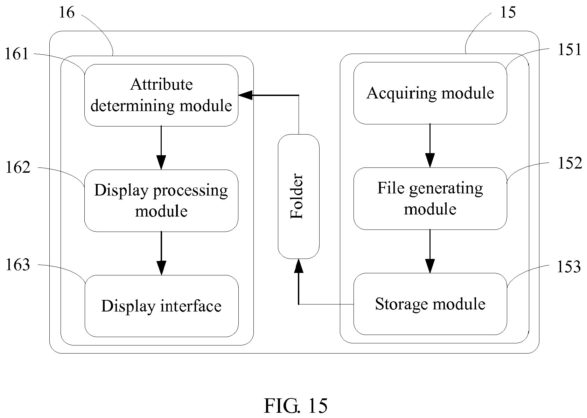

Implementation manner 15: Referring to FIG. 15, a mobile terminal of this implementation manner may be a mobile phone, a palmtop computer, or the like, which is not limited herein.

In this implementation manner, the mobile terminal includes both a folder management apparatus 15 and a folder display apparatus 16. The folder mentioned in this implementation manner may be an album on an Android-based native gallery interface (the following may be understood as descriptions for the album or the like) or a common folder, which may be correspondingly used to store one or more of a picture, a video and/or audio.

The folder management apparatus 15 may include an acquiring module 151, a file generating module 152, and a storage module 153.

The acquiring module 151 is configured to acquire a selected instruction that is generated after a to-be-processed folder is selected from a folder displayed on a display interface, and specifically, the acquiring module 151 is specifically configured to acquire a selected instruction that is generated after a to-be-processed album is selected from an album displayed on the gallery interface.

The file generating module 152 is configured to generate, according to the selected instruction acquired by the acquiring module 151, a display attribute file for hiding the to-be-processed folder; correspondingly, the file generating module 152 is specifically configured to generate, according to the selected instruction acquired by the acquiring module 151, a display attribute file for hiding the to-be-processed album.

The storage module 153 is configured to store, in the to-be-processed folder, the display attribute file generated by the file generating module 152, so as to hide the to-be-processed folder according to the display attribute file when the folder display apparatus 16 reads and records the to-be-processed folder and further determines that displaying is not performed on the display interface. Correspondingly, the storage module 153 is specifically configured to store, in the to-be-processed album, the display attribute file generated by the file generating module 152, so as to hide the to-be-processed album according to the display attribute file when the folder display apparatus 16 reads and records the to-be-processed album and determines that displaying is not performed on the gallery interface.

In a working process of the mobile terminal of this implementation manner, when the user selects the to-be-processed album, the file generating module 152 generates the display attribute file automatically according to selection of the user. The file generating module 152 may generate the display attribute file according to an attribute feature, or the like of the to-be-processed folder, or may generate the display attribute file automatically according to a pre-definition of a system, which is not limited in this implementation manner. Then, the storage module 153 acquires a storage path corresponding to the to-be-processed album; then, the storage module 153 writes the display attribute file into the to-be-processed album according to the storage path. In a process of performing the write action, a write path of the display attribute file may be formed according to the storage path, and the display attribute file is named according to a predetermined naming rule, so as to write the display attribute file which has been named into the to-be-processed album according to the write path. In addition, a specific manner of naming a display attribute file may be naming distinctively in a manner of a feature, such as a prefix or postfix, for example, the display attribute file is named a ".hidden" file, so as to better distinguish the display attribute file from another album; a size of the display attribute file may be 0 bytes or a size of another byte, which is not limited herein.

The folder display apparatus 16 of this implementation manner includes, but is not limited to, an attribute determining module 161, a display processing module 162, and a display interface 163.

The attribute determining module 161 is configured to: when the to-be-processed folder is read and recorded, determine whether the to-be-processed folder stores a corresponding display attribute file.

As described in the foregoing, the display attribute file may be generated by using the folder management method or the folder management apparatus in the foregoing one or more implementation manners, a storage path of the display attribute file corresponds to the to-be-processed folder, and the display attribute file is stored in the to-be-processed folder. The attribute determining module 161 may determine, according to a predetermined naming rule, whether the to-be-processed folder stores a corresponding display attribute file. For example, it is determined whether a file named ".hidden" or the like exists; or searching is performed according to a size of a file. Generally, a size of the display attribute file may be 0 bytes, and a conventional file needs to store a certain amount of data, or the like, so that a size of the conventional file is basically not 0 bytes. Further, the attribute determining module 161 may determine whether a hidden file exists in the to-be-processed folder and whether a name of the hidden file is the same as the predetermined naming rule (for example, ".hidden"), where the display attribute file is set in a hidden manner, which may effectively prevent a user from performing a delete operation by mistake.

As described in the foregoing, the attribute determining module 161 is specifically configured to: when the to-be-processed album is read and recorded, determine whether the to-be-processed album stores a corresponding display attribute file. The display processing module 162 is specifically configured to: when the attribute determining module 161 determines that the to-be-processed album stores a corresponding display attribute file, hide the to-be-processed album from the display interface 163.

The display processing module 162 is configured to: when the attribute determining module 161 determines that the to-be-processed folder stores a corresponding display attribute file, hide the to-be-processed folder from the display interface 163.

In this implementation manner, the display processing module 162 may simply perform processing of "displaying" or "hiding" by using the display attribute file, and in other implementation manners, the display processing module 132 may perform parallel determining on another condition, for example, similar to a personal computer or the like, different rights are set for different users, so as to protect personal privacy of a user, and a specific implementation process thereof is within a scope understood by a person skilled in the art, which is not limited. In addition, as described in the foregoing, when the display processing module 162 in this implementation manner determines that a file, such as ".hidden", is set according to the predetermined naming rule or manner, it may be considered that the user needs to hide the to-be-processed folder, and then a "hiding" operation is performed.

In addition, for another specific working process and principle of the mobile terminal in this implementation manner, reference may be made to related descriptions of other implementation manners, for example, a manner of setting "display all folders" and the like, which is within a scope that is easily understood by a person skilled in the art, and is not repeatedly described herein.

Compared with the prior art, the mobile terminal of the present application first stores, in a to-be-processed folder, a display attribute file used to indicate hiding of the corresponding to-be-processed folder (or a to-be-processed album), so that even if a feature (such as a storage path) of the to-be-processed folder is changed, determining can be still performed according to the display attribute file stored in the to-be-processed folder, so as to hide the to-be-processed folder that is preset to be hidden, which avoids unnecessary troubles and puzzles. Secondly, the display attribute file set in the present application merely indicates "hiding" of the corresponding to-be-processed folder, and a problem that the to-be-processed folder cannot be read and recorded due to being skipped and omitted is avoided; related information of the to-be-processed folder may be read and recorded in a manner in the prior art, and a hidden folder (or album) can be quickly displayed again according to the recorded related information when required to be displayed subsequently, thereby greatly facilitating use of a user, and improving user experience.

It should be noted that, in the several implementation manners provided in the present application, it should be understood that, the disclosed system, apparatus and method may be implemented in another manner. For example, the described apparatus implementation manners are merely exemplary. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. A part or all of the units may be selected according to actual needs to achieve the objectives of the solutions of the embodiments.

In addition, functional units in the embodiments of the present application may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present application essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present application. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

## Claims

1. An Android system-based folder management method, wherein the folder management method comprises:
acquiring (S100, S200) a selected instruction that is generated after a to-be-processed folder is selected from a folder displayed on a display interface;
generating (S101, S201), according to the selected instruction, a display attribute file for hiding the to-be-processed folder;
storing (S102, S202) the display attribute file in the to-be-processed folder, so as to hide the to-be-processed folder, which stores the display attribute file, from the display interface and to retain reading and recording of the to-be-processed folder performed by a device or system using the folder management method; and
when the to-be-processed folder is read and recorded, determining (S900) whether the to-be-processed folder stores a corresponding display attribute file,
when it is determined that the to-be-processed folder stores the corresponding display attribute file, hiding the to-be-processed folder from the display interface, and retaining reading and recording of the to-be-processed folder,
the step of acquiring a selected instruction that is generated after a to-be-processed folder is selected from a folder displayed on a display interface specifically comprises:
acquiring a selected instruction that is generated after a to-be-processed album is selected from an album displayed on a gallery interface, wherein the album is used to store a picture, audio and/or a video;
the step of generating, according to the selected instruction, a display attribute file for hiding the to-be-processed folder specifically comprises:
generating, according to the selected instruction, a display attribute file for hiding the to-be-processed album; and
the step of storing the display attribute file in the to-be-processed folder specifically comprises:
storing the display attribute file in the to-be-processed album, so as to hide the to-be-processed album, which stores the display attribute file, from the gallery interface when the to-be-processed album is read and recorded and it is further determined that the to-be-processed album stores a corresponding display attribute file.

2. The folder management method according to claim 1, wherein the step of storing the display attribute file in the to-be-processed folder specifically comprises:
after the display attribute file is generated, acquiring a storage path corresponding to the to-be-processed folder;
forming a write path of the display attribute file according to the storage path, and naming the display attribute file according to a predetermined naming rule; and
writing the display attribute file which has been named into the to-be-processed folder according to the write path.

3. The folder management method according to claim 1, wherein the folder management method further comprises:
acquiring a selected instruction that is generated after a to-be-displayed album is selected from an album displayed on the gallery interface;
searching for, based on a storage path of the to-be-displayed album and according to the selected instruction, a display attribute file for hiding the to-be-displayed album; and
when the corresponding display attribute file is found by searching, deleting the corresponding display attribute file from the to-be-displayed album, so as to display, when the to-be-displayed album with the display attribute file deleted is read and recorded and it is further determined that the to-be-displayed album is displayed on the gallery interface, the to-be-displayed album with the display attribute file deleted, wherein
the album displayed on the gallery interface comprises an album configured with no display attribute file in a corresponding storage path, and an album configured with a display attribute file in a corresponding storage path but displayed because "display all albums" set by a user is acquired.

4. An Android system-based mobile terminal, wherein the mobile terminal comprises a folder management apparatus (15) and a folder display apparatus (16), wherein the folder management apparatus comprises an acquiring module (151), a file generating module (152), and the folder display apparatus (16) comprises an attribute determining module (161), a display processing module (162), and a display interface (163), wherein:
the acquiring module (151) is configured to acquire a selected instruction that is generated after a to-be-processed folder is selected from a folder displayed on the display interface (163);
the file generating module (152) is configured to generate, according to the selected instruction acquired by the acquiring module, a display attribute file for hiding the to-be-processed folder;
the storage module (163) is configured to store, in the to-be-processed folder, the display attribute file generated by the file generating module, so as to hide the to-be-processed folder, which stores the display attribute file, from the display interface and to retain reading and recording of the to-be-processed folder;
the attribute determining module (161) is configured to determine whether the to-be-processed folder stores a corresponding display attribute file, when the to-be-processed folder is read and recorded; and
when it is determined that the to-be-processed folder stores the corresponding display attribute file, the display processing module 162 is configured to hide the to-be-processed folder from a display interface, and the folder display apparatus (16) is configured to retain reading and recording of the to-be-processed folder,
wherein:
the acquiring module is specifically configured to acquire a selected instruction that is generated after a to-be-processed album is selected from an album displayed on a gallery interface, wherein the gallery interface comprises an Android native gallery interface, and the album is used to store a picture, audio and/or a video;
the file generating module is specifically configured to generate, according to the selected instruction acquired by the acquiring module, a display attribute file for hiding the to-be-processed album; and
the storage module is specifically configured to store, in the to-be-processed album, the display attribute file generated by the file generating module, so as to hide the to-be-processed album, which stores the display attribute file, from the display interface when the folder display apparatus reads and records the to-be-processed album and further determines that the to-be-processed album stores a corresponding display attribute file.

5. The mobile terminal according to claim 4, wherein the storage module specifically comprises:
a path acquiring unit, configured to: after the file generating module generates the display attribute file, acquire a storage path corresponding to the to-be-processed folder; and
a processing unit, configured to form a write path of the display attribute file according to the storage path acquired by the path acquiring unit, name the display attribute file according to a predetermined naming rule, and write the display attribute file which has been named into the to-be-processed folder according to the write path.

6. The mobile terminal according to claim 4, wherein the acquiring module is further specifically configured to acquire a selected instruction that is generated after a to-be-displayed album is selected from an album displayed on the gallery interface, and the folder management apparatus further comprises:
a searching module, configured to search for, based on a storage path of the to-be-displayed album and according to the selected instruction acquired by the acquiring module, a display attribute file for hiding the to-be-displayed album; and
a deleting module, configured to: when the searching module finds the corresponding display attribute file by searching, delete the corresponding display attribute file from the to-be-displayed album, so as to display, when the to-be-displayed album with the display attribute file deleted is read and recorded and it is further determined that the to-be-displayed album is displayed on the gallery interface, the to-be-displayed album with the display attribute file deleted, wherein
the album displayed on the gallery interface comprises an album configured with no display attribute file in a corresponding storage path, and an album configured with a display attribute file in a corresponding storage path but displayed because "display all albums" set by a user is acquired.

## Patentansprüche

1. Verwaltungsverfahren für Android-System-basierte Ordner, wobei das Ordnerverwaltungsverfahren umfasst:
Erfassen (S100, S200) eines ausgewählten Befehls, der erzeugt wird, nachdem ein zu bearbeitender Ordner aus einem Ordner ausgewählt wurde, der auf einer Anzeigeoberfläche angezeigt wird,
Erzeugen (S101 S201), gemäß dem ausgewählten Befehl, einer Anzeigeattributdatei zum Ausblenden des zu bearbeitenden Ordners,
Speichern (S102, S202) der Anzeigeattributdatei in dem zu bearbeitenden Ordner, um den zu bearbeitenden Ordner, in dem die Anzeigeattributdatei gespeichert ist, von der Anzeigeoberfläche auszublenden und um ein Lesen und ein Aufzeichnen des zu bearbeitenden Ordners beizubehalten, das von einer Vorrichtung oder einem System durchgeführt wird, die das Ordnerverwaltungsverfahren verwenden; und
wenn der zu bearbeitende Ordner gelesen und aufgezeichnet wird, Ermitteln (S900), ob eine entsprechende Anzeigeattributdatei in dem zu bearbeitenden Ordner gespeichert wurde,
wenn ermittelt wird, dass die entsprechende Anzeigeattributdatei in dem zu bearbeitenden Ordner gespeichert wurde, Ausblenden des zu bearbeitenden Ordners von der Anzeigeoberfläche, und Beibehalten des Lesens und Aufzeichnens des zu bearbeitenden Ordners,
wobei der Schritt des Erfassens eines ausgewählten Befehls, der erzeugt wird, nachdem ein zu bearbeitender Ordner aus einem Ordner ausgewählt wurde, der auf einer Anzeigeoberfläche angezeigt wird, insbesondere umfasst:
Erfassen eines ausgewählten Befehls, der erzeugt wird, nachdem ein zu bearbeitendes Album aus einem Album ausgewählt wurde, das auf einer Galerieoberfläche angezeigt wird, wobei das Album verwendet wird, um ein Bild, Audio und/oder ein Video zu speichern;
wobei der Schritt des Erzeugens, gemäß dem ausgewählten Befehl, einer Anzeigeattributdatei zum Ausblenden des zu bearbeitenden Ordners, insbesondere umfasst:
Erzeugen, gemäß dem ausgewählten Befehl, einer Anzeigeattributdatei zum Ausblenden des zu bearbeitenden Albums; und
wobei der Schritt des Speicherns der Anzeigeattributdatei in dem zu bearbeitenden Ordner insbesondere umfasst:
Speichern der Anzeigeattributdatei in dem zu bearbeitenden Album, um das zu bearbeitende Album, in dem die Anzeigeattributdatei gespeichert ist, von der Galerieoberfläche auszublenden, wenn das zu bearbeitende Album gelesen und aufgezeichnet wird und wobei außerdem ermittelt wird, dass in dem zu bearbeitenden Album eine entsprechende Anzeigeattributdatei gespeichert ist.

2. Ordnerverwaltungsverfahren nach Anspruch 1, wobei der Schritt des Speicherns der Anzeigeattributdatei in dem zu bearbeitenden Ordner insbesondere umfasst:
nachdem die Anzeigeattributdatei erzeugt wurde, Erfassen eines Speicherpfads, der dem zu bearbeitenden Ordner entspricht;
Bilden eines Schreibpfads der Anzeigeattributdatei gemäß dem Speicherpfad und Benennen der Anzeigeattributdatei gemäß einer vorbestimmten Benennungsregel; und
Schreiben der Anzeigeattributdatei, die benannt wurde, in den zu bearbeitenden Ordner gemäß dem Schreibpfad.

3. Ordnerverwaltungsverfahren nach Anspruch 1, wobei das Ordnerverwaltungsverfahren außerdem umfasst:
Erfassen eines ausgewählten Befehls, der erzeugt wird, nachdem ein anzuzeigendes Album aus einem Album ausgewählt wurde, das auf der Galerieoberfläche angezeigt wird,
Suchen, basierend auf einem Speicherpfad des anzuzeigenden Albums und gemäß dem ausgewählten Befehl, einer Anzeigeattributdatei, um das anzuzeigende Album auszublenden; und
wenn die entsprechende Anzeigeattributdatei durch das Suchen gefunden wird, Löschen der entsprechenden Anzeigeattributdatei aus dem anzuzeigenden Album, um, wenn das anzuzeigende Album mit der gelöschten Anzeigeattributdatei gelesen und aufgezeichnet wird und wenn außerdem ermittelt wird, dass das anzuzeigende Album auf der Galerieoberfläche angezeigt wird, das anzuzeigende Album mit der gelöschten Anzeigeattributdatei anzuzeigen, wobei
das Album, das auf der Galerieoberfläche angezeigt wird, ein Album umfasst, das nicht mit einer Anzeigeattributdatei in einem entsprechenden Speicherpfad konfiguriert ist, und ein Album umfasst, das mit einer Anzeigeattributdatei in einem entsprechenden Speicherpfad konfiguriert ist, aber angezeigt wird, weil ein "Anzeigen aller Alben" erfasst wird, das von einem Benutzer eingestellt wurde.

4. Android-System-basiertes Mobilfunkendgerät, wobei das Mobilfunkengerät eine Ordnerverwaltungseinrichtung (15) und eine Ordneranzeigeeinrichtung (16) umfasst, wobei die Ordnerverwaltungseinrichtung ein Erfassungsmodul (151) und ein Dateierzeugungsmodul (152) umfasst, und wobei die Ordneranzeigeeinrichtung (16) ein Attributermittlungsmodul (161), ein Anzeigebearbeitungsmodul (162) und eine Anzeigeoberfläche (163) umfasst, wobei:
das Erfassungsmodul (151) konfiguriert ist zum Erfassen eines ausgewählten Befehls, der erzeugt wird, nachdem ein zu bearbeitender Ordner aus einem Ordner ausgewählt wurde, der auf der Anzeigeoberfläche (163) angezeigt wird,
das Dateierzeugungsmodul (152) konfiguriert ist zum Erzeugen, gemäß dem ausgewählten Befehl, der von dem Erfassungsmodul erfasst wurde, einer Anzeigeattributdatei zum Ausblenden des zu bearbeitenden Ordners;
das Speichermodul (163) konfiguriert ist zum Speichern, in dem zu bearbeitenden Ordner, der Anzeigeattributdatei, die durch das Dateierzeugungsmodul erzeugt wurde, um den zu bearbeitenden Ordner, in dem die Anzeigeattributdatei gespeichert ist, von der Anzeigeoberfläche auszublenden und um ein Lesen und ein Aufzeichnen des zu bearbeitenden Ordners beizubehalten,
das Attributermittlungsmodul (161) konfiguriert ist zum Ermitteln, ob in dem zu bearbeitenden Ordner eine entsprechende Anzeigeattributdatei gespeichert ist, wenn der zu bearbeitende Ordner gelesen und aufgezeichnet wird, und
wenn ermittelt wird, dass die entsprechende Anzeigeattributdatei in dem zu bearbeitenden Ordner gespeichert wurde, das Anzeigebearbeitungsmodul (162) konfiguriert ist zum Ausblenden des zu bearbeitenden Ordners von einer Anzeigeoberfläche, und wobei die Ordneranzeigeeinrichtung (16) konfiguriert ist zum Beibehalten des Lesens und Aufzeichnens des zu bearbeitenden Ordners,
wobei:
das Erfassungsmodul insbesondere konfiguriert ist zum Erfassen eines ausgewählten Befehls, der erzeugt wird, nachdem ein zu bearbeitendes Album aus einem Album ausgewählt wurde, das auf einer Galerieoberfläche angezeigt wird, wobei die Galerieoberfläche eine Android-systemeigene Galerieoberfläche umfasst und wobei das Album verwendet wird, um ein Bild, ein Audio und/oder ein Video zu speichern;
das Dateierzeugungsmodul insbesondere konfiguriert ist zum Erzeugen, gemäß dem ausgewählten Befehl, der von dem Erfassungsmodul erfasst wurde, einer Anzeigeattributdatei zum Ausblenden des zu bearbeitenden Albums; und
das Speichermodul insbesondere konfiguriert ist zum Speichern, in dem zu bearbeitenden Album, der Anzeigeattributdatei, die durch das Dateierzeugungsmodul erzeugt wurde, um das zu bearbeitenden Album, in dem die Anzeigeattributdatei gespeichert ist, von der Anzeigeoberfläche auszublenden, wenn die Ordneranzeigeeinrichtung das zu bearbeitende Album liest und aufzeichnet und
außerdem ermittelt, dass in dem zu bearbeitenden Album eine entsprechende Anzeigeattributdatei gespeichert ist.

5. Mobilfunkendgerät nach Anspruch 4, wobei das Speichermodul insbesondere umfasst:
eine Pfaderfassungseinheit, die konfiguriert ist zum: nachdem das Dateierzeugungsmodul die Anzeigeattributdatei erzeugt hat, Erfassen eines Speicherpfads, der dem zu bearbeitenden Ordner entspricht; und
eine Verarbeitungseinheit, die konfiguriert ist zum Bilden eines Schreibpfads der Anzeigeattributdatei gemäß dem Speicherpfad, der von der Pfaderfassungseinheit erfasst wurde, zum Benennen der Anzeigeattributdatei gemäß einer vorbestimmten Benennungsregel und zum Schreiben der Anzeigeattributdatei, die benannt wurde, in den zu bearbeitenden Ordner gemäß dem Schreibpfad.

6. Mobilfunkendgerät nach Anspruch 4, wobei das Erfassungsmodul außerdem insbesondere konfiguriert ist zum Erfassen eines ausgewählten Befehls, der erzeugt wird, nachdem ein anzuzeigendes Album aus einem Album ausgewählt wurde, das auf der Galerieoberfläche angezeigt wird, und wobei die Ordnerverwaltungseinrichtung außerdem umfasst:
ein Suchmodul, das konfiguriert ist zum Suchen, basierend auf einem Speicherpfad des anzuzeigenden Albums und gemäß dem ausgewählten Befehl, der von dem Erfassungsmodul erfasst wurde, einer Anzeigeattributdatei, um das anzuzeigende Album auszublenden; und
ein Löschmodul, das konfiguriert ist zum: wenn das Suchmodul die entsprechende Anzeigeattributdatei durch ein Suchen findet, Löschen der entsprechenden Anzeigeattributdatei aus dem anzuzeigenden Album, um, wenn das anzuzeigende Album mit der gelöschten Anzeigeattributdatei gelesen und aufgezeichnet wird und wenn außerdem ermittelt wird, dass anzuzeigende Album auf der Galerieoberfläche angezeigt wird, das anzuzeigende Album mit der gelöschten Anzeigeattributdatei anzuzeigen, wobei
das Album, das auf der Galerieoberfläche angezeigt wird, ein Album umfasst, das nicht mit einer Anzeigeattributdatei in einem entsprechenden Speicherpfad konfiguriert ist, und ein Album umfasst, das mit einer Anzeigeattributdatei in einem entsprechenden Speicherpfad konfiguriert ist, aber angezeigt wird, weil ein "Anzeigen aller Alben" erfasst wird, das von einem Benutzer eingestellt wurde.

## Revendications

1. Procédé de gestion de dossiers basé sur le système Android, le procédé de gestion de dossiers comprenant les étapes suivantes :
acquérir (S100, S200) une instruction sélectionnée qui est générée après qu'un dossier à traiter a été sélectionné à partir d'un dossier affiché sur une interface d'affichage ;
générer (S101, S201), selon l'instruction sélectionnée, un fichier d'attributs d'affichage pour cacher le dossier à traiter ;
stocker (S102, S202) le fichier d'attributs d'affichage dans le dossier à traiter, de manière à cacher le dossier à traiter, qui stocke le fichier d'attributs d'affichage, de l'interface d'affichage et à conserver la lecture et l'enregistrement du dossier à traiter effectués par un dispositif ou un système utilisant le procédé de gestion de dossiers ; et
lorsque le dossier à traiter est lu et enregistré, déterminer (S900) si le dossier à traiter stocke un fichier d'attributs d'affichage correspondant,
lorsqu'il est déterminé que le dossier à traiter stocke le fichier d'attributs d'affichage correspondant, cacher le dossier à traiter de l'interface d'affichage, et conserver la lecture et l'enregistrement du dossier à traiter,
l'étape d'acquisition d'une instruction sélectionnée qui est générée après qu'un dossier à traiter a été sélectionné à partir d'un dossier affiché sur une interface d'affichage comprenant spécifiquement :
l'acquisition d'une instruction sélectionnée qui est générée après qu'un album à traiter a été sélectionné à partir d'un album affiché sur une interface de galerie, dans lequel l'album est utilisé pour stocker une image, un contenu audio et/ou un contenu vidéo ;
l'étape de génération, selon l'instruction sélectionnée, d'un fichier d'attributs d'affichage pour cacher le dossier à traiter comprenant spécifiquement :
la génération, selon l'instruction sélectionnée, d'un fichier d'attributs d'affichage pour cacher l'album à traiter ; et
l'étape de stockage du fichier d'attributs d'affichage dans le dossier à traiter comprenant spécifiquement :
le stockage du fichier d'attributs d'affichage dans l'album à traiter, de manière à cacher l'album à traiter, qui stocke le fichier d'attributs d'affichage, de l'interface de galerie lorsque l'album à traiter est lu et enregistré et qu'il est en outre déterminé que l'album à traiter stocke un fichier d'attributs d'affichage correspondant.

2. Procédé de gestion de dossiers selon la revendication 1, dans lequel l'étape de stockage du fichier d'attributs d'affichage dans le dossier à traiter comprend spécifiquement les étapes suivantes :
après que le fichier d'attributs d'affichage a été généré, acquérir un chemin de stockage correspondant au dossier à traiter ;
former un chemin d'écriture du fichier d'attributs d'affichage en fonction du chemin de stockage, et nommer le fichier d'attributs d'affichage en fonction d'une règle de nommage prédéterminée ; et
écrire le fichier d'attributs d'affichage qui a été nommé dans le dossier à traiter selon le chemin d'écriture.

3. Procédé de gestion de dossiers selon la revendication 1, le procédé de gestion de dossiers comprenant en outre les étapes suivantes :
acquérir une instruction sélectionnée qui est générée après qu'un album à afficher a été sélectionné à partir d'un album affiché sur l'interface de galerie ;
rechercher, sur la base d'un chemin de stockage de l'album à afficher, et selon l'instruction sélectionnée, un fichier d'attributs d'affichage pour cacher l'album à afficher ; et
lorsque le fichier d'attributs d'affichage correspondant est trouvé par la recherche, supprimer le fichier d'attributs d'affichage correspondant de l'album à afficher, de manière à afficher, lorsque l'album à afficher avec le fichier d'attributs d'affichage supprimé est lu et enregistré et qu'il est en outre déterminé que l'album à afficher est affiché sur l'interface de galerie, l'album à afficher avec le fichier d'attributs d'affichage supprimé, dans lequel
l'album affiché sur l'interface de galerie comprend un album configuré sans fichier d'attributs d'affichage dans un chemin de stockage correspondant, et un album configuré avec un fichier d'attributs d'affichage dans un chemin de stockage correspondant mais affiché car « afficher tous les albums » défini par un utilisateur est acquis.

4. Terminal mobile basé sur le système Android, le terminal mobile comprenant un appareil de gestion de dossiers (15) et un appareil d'affichage de dossiers (16), dans lequel l'appareil de gestion de dossiers comprend un module d'acquisition (151), un module de génération de fichiers (152), et l'appareil d'affichage de dossiers (16) comprend un module de détermination d'attributs (161), un module de traitement d'affichage (162) et une interface d'affichage (163), dans lequel :
le module d'acquisition (151) est configuré pour acquérir une instruction sélectionnée qui est générée après qu'un dossier à traiter a été sélectionné à partir d'un dossier affiché sur l'interface d'affichage (163) ;
le module de génération de fichiers (152) est configuré pour générer, selon l'instruction sélectionnée acquise par le module d'acquisition, un fichier d'attributs d'affichage pour cacher le dossier à traiter ;
le module de stockage (163) est configuré pour stocker, dans le dossier à traiter, le fichier d'attributs d'affichage généré par le module de génération de fichiers, de manière à cacher le dossier à traiter, qui stocke le fichier d'attributs d'affichage, de l'interface d'affichage et à conserver la lecture et l'enregistrement du dossier à traiter ;
le module de détermination d'attributs (161) est configuré pour déterminer si le dossier à traiter stocke un fichier d'attributs d'affichage correspondant, lorsque le dossier à traiter est lu et enregistré ; et
lorsqu'il est déterminé que le dossier à traiter stocke le fichier d'attributs d'affichage correspondant, le module de traitement d'affichage 162 est configuré pour cacher le dossier à traiter d'une interface d'affichage, et l'appareil d'affichage de dossiers (16) est configuré pour conserver la lecture et l'enregistrement du dossier à traiter,
dans lequel :
le module d'acquisition est spécifiquement configuré pour acquérir une instruction sélectionnée qui est générée après qu'un album à traiter a été sélectionné à partir d'un album affiché sur une interface de galerie, dans lequel l'interface de galerie comprend une interface de galerie native Android, et l'album est utilisé pour stocker une image, un contenu audio et/ou un contenu vidéo ;
le module de génération de fichiers est spécifiquement configuré pour générer, selon l'instruction sélectionnée acquise par le module d'acquisition, un fichier d'attributs d'affichage pour cacher l'album à traiter ; et
le module de stockage est spécifiquement configuré pour stocker, dans l'album à traiter, le fichier d'attributs d'affichage généré par le module de génération de fichiers, de manière à cacher l'album à traiter, qui stocke le fichier d'attributs d'affichage, de l'interface d'affichage lorsque l'appareil d'affichage de dossiers lit et enregistre l'album à traiter et détermine en outre que l'album à traiter stocke un fichier d'attributs d'affichage correspondant.

5. Terminal mobile selon la revendication 4, dans lequel le module de stockage comprend spécifiquement :
une unité d'acquisition de chemin, configurée pour : après que le module de génération de fichiers a généré le fichier d'attributs d'affichage, acquérir un chemin de stockage correspondant au dossier à traiter ; et
une unité de traitement, configurée pour former un chemin d'écriture du fichier d'attributs d'affichage selon le chemin de stockage acquis par l'unité d'acquisition de chemin, nommer le fichier d'attributs d'affichage selon une règle de nommage prédéterminée, et écrire le fichier d'attributs d'affichage qui a été nommé dans le dossier à traiter selon le chemin d'écriture.

6. Terminal mobile selon la revendication 4, dans lequel le module d'acquisition est en outre spécifiquement configuré pour acquérir une instruction sélectionnée qui est générée après qu'un album à afficher a été sélectionné à partir d'un album affiché sur l'interface de galerie, et l'appareil de gestion de dossiers comprend en outre :
un module de recherche, configuré pour rechercher, sur la base d'un chemin de stockage de l'album à afficher et en fonction de l'instruction sélectionnée acquise par le module d'acquisition, un fichier d'attributs d'affichage pour cacher l'album à afficher ; et
un module de suppression, configuré pour : lorsque le module de recherche trouve le fichier d'attributs d'affichage correspondant par la recherche, supprimer le fichier d'attributs d'affichage correspondant de l'album à afficher, de manière à afficher, lorsque l'album à afficher avec le fichier d'attributs d'affichage supprimé est lu et enregistré et qu'il est en outre déterminé que l'album à afficher est affiché sur l'interface de galerie, l'album à afficher avec le fichier d'attributs d'affichage supprimé, dans lequel
l'album affiché sur l'interface de galerie comprend un album configuré sans fichier d'attributs d'affichage dans un chemin de stockage correspondant, et un album configuré avec un fichier d'attributs d'affichage dans un chemin de stockage correspondant mais affiché car « afficher tous les albums » défini par un utilisateur est acquis.
